(19) Europäisches Patentamt
European Patent Office
Office européen des brevets

(11) **EP 1 800 136 B1**

(12) **EUROPEAN PATENT SPECIFICATION**

(45) Date of publication and mention of the grant of the patent:
**07.12.2011 Bulletin 2011/49**

(51) Int Cl.:
***G01N 33/68*** (2006.01)

(21) Application number: **05810831.7**

(22) Date of filing: **14.10.2005**

(86) International application number:
**PCT/US2005/037004**

(87) International publication number:
**WO 2006/044650 (27.04.2006 Gazette 2006/17)**

(54) **COMPETITIVE DIFFERENTIAL SCREENING**

KOMPETITVEN DIFFERENTIAL SCREENING

CRIBLAGE DIFFERENTIEL COMPETITIF

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.10.2004 US 619562 P**
**03.12.2004 US 632908 P**

(43) Date of publication of application:
**27.06.2007 Bulletin 2007/26**

(73) Proprietor: **Danisco US Inc.**
**Palo Alto, CA 94304 (US)**

(72) Inventors:
• **DAY, Anthony, G.**
**Palo Alto, California 94304 (US)**
• **ESTELL, David, A.**
**Palo Alto, California 94304 (US)**
• **JEDZEJEWSKI, Paul, T.**
**Castro Valley, CA 94552 (US)**
• **MURRAY, Christopher, J.**
**Palo Alto, California 94304 (US)**

(74) Representative: **Kiddle, Simon John**
**Mewburn Ellis LLP**
**33 Gutter Lane**
**London**
**EC2V 8AS (GB)**

(56) References cited:
**WO-A-00/61634      WO-A-00/61782**
**WO-A-99/12936**

• **YANG E A: "Engineering bidentate macromolecular inhibitors for trypsin and urokinase-type plasminogen activator" JOURNAL OF MOLECULAR BIOLOGY, LONDON, GB, vol. 279, 19 June 1998 (1998-06-19), pages 1001-1011, XP002150105 ISSN: 0022-2836**
• **YANG S Q ET AL: "Ecotin: a serine protease inhibitor with two distinct and interacting binding sites" JOURNAL OF MOLECULAR BIOLOGY, LONDON, GB, vol. 279, no. 4, 19 June 1998 (1998-06-19), pages 945-957, XP004466351 ISSN: 0022-2836**

**Description**

**FIELD OF THE INVENTION**

The present invention provides methods for screening for compounds of interest. In particular, the present invention provides methods for competitive differential screening. In some preferred embodiments, the present invention provides methods for competitive differential screening that facilitate the identification of tight binders. In some preferred embodiments, the agents used in the methods of the present invention comprise tight and weak binders. In other embodiments, the present invention provides methods that utilize competitive binders that recognize and bind targets, but with binding that is less strong than that of binders of interest.

**BACKGROUND OF THE INVENTION**

Currently used procedures for screening and/or identifying compounds (*e.g.*, binders) of interest typically involve the steps of: incubating a pool of various compounds with anti-targets (*i.e.*, pre-selected undesired targets) immobilized to a surface; washing off compounds that do not bind to the anti-targets; and reapplying the washed-off compounds to a second, or new, target source. Incubation with the anti-targets diminishes the pool of compounds that bind to undesired targets. Thus, this step screens out compounds that bind the anti-targets, providing a pool that is displays less contamination and reduced background in assays used to identify compounds of interest. In some assay systems, there are several rounds of selection and de-selection against targets and anti-targets.

Contamination is often a significant problem. Because the pool is not depleted of common targets, background noise results. Methods for reducing contamination and background noise, especially against the common targets, have been developed and incorporated into some methods. In some methods, blocking or pre-clearing steps designed to effectively screen put binders to common targets are incorporated. Blocking or pre-clearing steps may involve, for example, incubation with proteins such as skim milk proteins or other common proteins, since those proteins contain many of the common targets. Blocking or pre-clearing incubation is also sometimes conducted using a mild detergent (*e.g.*, TWEEN®-20 or Triton X-100).

In addition to various immunoassay systems, these approaches have found use in phage display methods. For example, blocking or pre-clearing steps against contaminating epitopes have been employed for reducing enrichment of phage. In this approach, phage are pre-incubated with a solid phase but without a specific target of interest. Phage are then selected and subsequently incubated against the target of interest.

Although these methods have been refined over time, they have not proven entirely successful and have often failed to minimize contamination and background noise. With contamination present, it is often difficult or even impossible to distinguish and subsequently isolate specific compounds binding to targets of interest. Thus, methods that overcome these contamination and background issues are needed in the art.

**SUMMARY OF THE INVENTION**

The present invention provides methods for screening for compounds of interest. In particular, the present invention provides methods for competitive differential screening. In some preferred embodiments, the present invention provides methods for competitive differential screening that facilitate the identification of tight binders. In some preferred embodiments, the agents used in the methods of the present invention comprise tight and weak binders. In other embodiments, the present invention provides methods that utilize competitive binders that recognize and bind targets, but with binding that is less strong than that of binders of interest.

The present invention provides methods for isolating at least one binder of interest, comprising the steps of: contacting a first target population with a first collection of agents, under conditions such that at least a portion of the agents in the first collection bind to the first target population to produce a first bound target; washing the first bound target; eluting the agents bound to the target in the first bound target to produce a collection of anti-target agents; amplifying the collection of anti-target agents to produce an amplified collection of anti-target agents; exposing at the amplified collection of anti-target agents and b) the first

collection of agents and/or a second collection of agents to a second target population, under conditions such that at least a portion of the agents bind to the second target population to produce a second bound target, wherein the first and second target population are different; washing the second bound target; and distinguishing, separating and identifying the at least one binder of interest. In some embodiments, the agents are proteins, polypeptides, peptides, while in other embodiments, the agents are nucleic acids. In some preferred embodiments, the nucleic acids are DNA and/or RNA. In additional embodiments, the target is selected from the group consisting of cancerous cells, cell lines, cell cultures, tumor extracts, cancerous tissues, organs, molecules associated with cancerous cells, molecules associated with cancerous cell lines, molecules associated with cancerous cell cultures, molecules associated with tumor extracts, molecules associated with cancerous tissues, and molecules associated with cancerous organs. In further embodiments, the target is an antigen. In some preferred embodiments, the antigen is selected from the group consisting of cancer antigens muc-1, Tag72, CEA, CD22, ED-B and FAP. The first target population and the second target population are different. In some embodiments, the target population and the second target population are cells. In some preferred embodiments, the first target population contains normal cells and the second target population contains abnormal cells. In some alternative embodiments, the second target population comprises tumor cells. In yet additional embodiments, at least one of the steps is repeated. In further embodiments, at least two of the steps are repeated. In still further embodiments, the concentration of the amplified collection of anti-target agents is at least 1000-fold greater than the concentration of the first collection of agents. In some preferred embodiments, each member of the collection of anti-target agents is present at a level selected from the group consisting of about 100-fold, about 500-fold, about 1000-fold, about 5000-fold, about 10,000-fold, about 100,000-fold, and about 1,000,000-fold greater the levels prior to amplification. In yet additional preferred embodiments, the methods further utilize phage display. In some phage display embodiments, the agent is a peptide present on the surface of a phage or a phage-infected cell and the anti-target agent is a different peptide present on the surface of a phage or a phage-infected cell. In additional phage display embodiments, the methods further comprise the step of deactivating the phage comprising an anti-target agent, prior to incubating the amplified collection with the second target population and the first collection of agents. In some preferred embodiments, deactivation is accomplished by exposing the phage to a temperature that renders the phage non-viable.

The present invention also provides methods for isolating at least one peptide of interest, comprising: incubating at least one collection of wild-type cells with a first pool of phage-displayed peptides, under conditions such that at least a portion of the wild-type cells will bind at least some members in the first pool of phage-displayed peptides to produce bound cells and unbound phage; washing the bound cells and unbound phage under conditions such that the unbound phage are removed; eluting phage that are bound to the bound cells, to produce a collection of anti-target peptides; amplifying the collection of anti-target peptides; applying the amplified collection of anti-target peptides and the first and/or a second pool of phage-displayed peptides to abnormal cells, under conditions such that at least a portion of the abnormal cells bind to the anti-target peptides or the first and/or the second pool of phage-displayed peptides to produce bound abnormal cells having bound anti-target peptides and at least one peptide of interest; washing the bound abnormal cells and removing any phage that do not bind to the surfaces of the abnormal cells to leave a cell surface covered with bound anti-target peptides and at least one peptide of interest; distinguishing and/or separating the phage bearing the at least one peptide of interest from the abnormal cells bearing the anti-target peptides; and identifying at least one peptide of interest. In some embodiments, the first and second collections of phage contain different genomes. In yet further embodiments, the step of identifying the peptide is accomplished using amplification with oligonucleotides that are specific to at least a part nucleic acid sequence in the second collection of phage. In some alternative embodiments, the methods further comprise the step of using antimicrobial resistance patterns to distinguish between the first and second collections of phage. In some alternative embodiments, the second target population comprises tumor cells. In yet additional embodiments, at least one of the steps is repeated. In further embodiments, at least two of the steps are repeated. In some additional embodiments, the concentration of the amplified collection of anti-target phage is at least about 1000-fold greater than the concentration of the second collection of phage. In still further embodiments, the methods further comprise the step of deactivating the phage comprising an anti-target agent, prior to incubating the amplified collection with the second target population and the first collection of agents. In some preferred embodiments, deactivation is accomplished by exposing the phage to a temperature that renders the phage non-viable.

## DESCRIPTION OF THE FIGURES

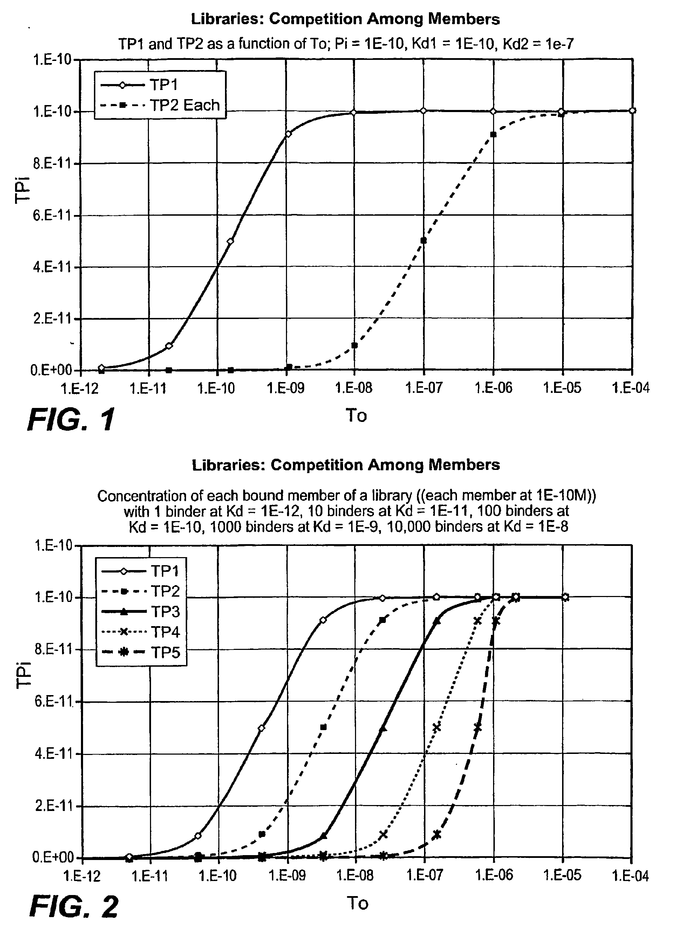

Figure 1 provides a graph showing competition between library members P1 and P2, both present at a concentration of $1^{-10}$M, with the concentration of target-bound P1 and P2 (TP1 and TP2 respectively) charted as a function of target concentration (To). The dissociation constants for P1 and P2 are $Kd1 = 1^{-10}$M, $Kd2 = 1^{-7}$ M, respectively. The x-axis shows target concentration (Molar) and the y-axis shows concentration (Molar) of target-bound member. As indicated by this Figure, the amount of library member bound is a function of disassociation constant and target concentration.

Figure 2 provides the concentration of each bound member (TPi) of a library (each member was present at a concentration of $1^{-10}$ M) as a function of target concentration, with 1 binder (P1) $Kd = 1^{-12}$ M, 10 binders (P2) at $Kd = 1^{-11}$ M, 100 binders (P3) at $Kd = 1^{-10}$ M, 1000 binders (P4) at $Kd = 1^{-9}$ M, and 10,000 binders (P5) at $Kd = 1^{-8}$ M. The x-axis shows target concentration (Molar) and the y-axis shows concentration (Molar) of target-bound member. As indicated by this Figure, the amount of library member bound is a function of the dissociation constant and target concentration for libraries with members P1 through P5.

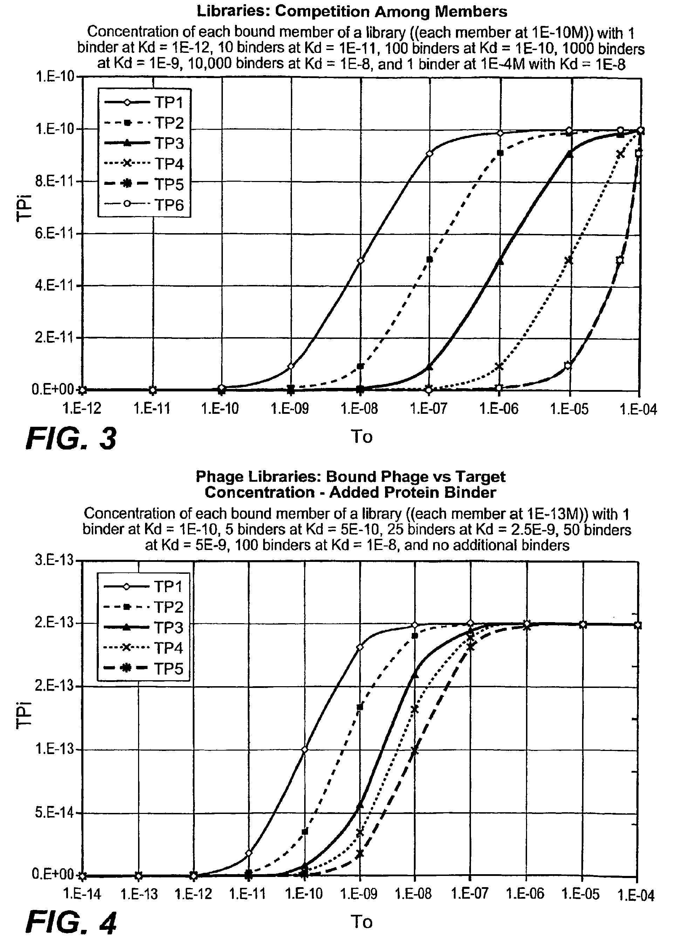

Figure 3 provides the concentration of each bound member, TPi, of a library (each member was present at a

concentration of $1^{-10}$ M) as a function of target concentration, with 1 binder (P1) Kd = $1^{-12}$ M, 10 binders (P2) at Kd = $1^{-11}$ M, 100 binders (P3) at Kd = $1^{-10}$ M, 1000 binders (P4) at Kd = $1^{-9}$ M, and 10,000 binders (P5) at Kd = $1^{-8}$ M. All conditions were the same as in Figure 2, except that 1 additional competitive binder (P6) at Kd = $1^{-8}$ M was added at a concentration of $1^{-4}$ M. The x-axis shows target concentration (Molar) and the y-axis shows concentration (Molar) of target-bound member. As indicated by this Figure, the amount of library member bound is a function of the dissociation constant and target concentration for a library with members P1 through P5.

Figure 4 provides a graph showing bound phage verses target concentration. This Figure shows the concentration of each bound member (TPi), of a phage library (each member present at a concentration of $1^{-13}$ M) with 1 binder (P1) at Kd = $1^{-10}$ M, 5 binders (P2) at Kd = $5^{-10}$ M, 25 binders (P3) at Kd $2.5^{-9}$ M, 50 binders (P4) at Kd = $5^{-9}$ M, and 100 binders (P5) at Kd = $1^{-8}$ M (and no additional binders). The x-axis shows target concentration (Molar) and the y-axis shows concentration (Molar) of target-bound member. This Figure shows the amount of library member bound as a function of dissociation constant and target concentration for a typical phage library with members P1 through P5.

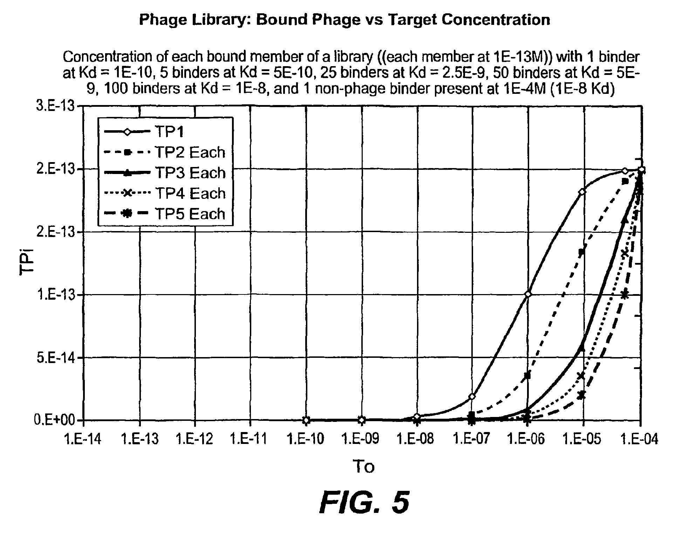

Figure 5 provides a graph showing bound phage verses target concentration. This Figure shows the concentration of each bound member (TPi), of a phage library (each member present at a concentration of $1^{-13}$ M) with 1 binder (P1) at Kd = $1^{-10}$ M, 5 binders (P2) at Kd = $5^{-10}$ M, 25 binders (P3) at Kd $2.5^{-9}$ M, 50 binders (P4) at Kd = $5^{-9}$ M, and 100 binders (P5) at Kd = $1^{-8}$ M (and no additional binders). The conditions were the same as shown in Figure 4, except that 1 additional competitive non-phage binder (P6) was present at $1^{-4}$ M ($1^{-8}$ M Kd). The x-axis shows target concentration (Molar) and the y-axis shows concentration (Molar) of target-bound member. The Figure shows amount of library member bound as a function of dissociation constant and target concentration for a typical phage library with members P1 through P5 with one added competitive binder.

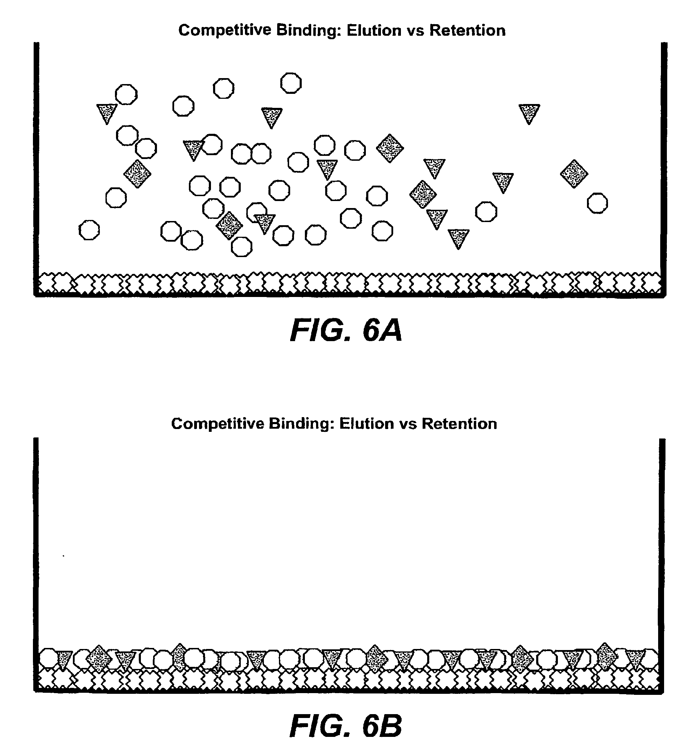

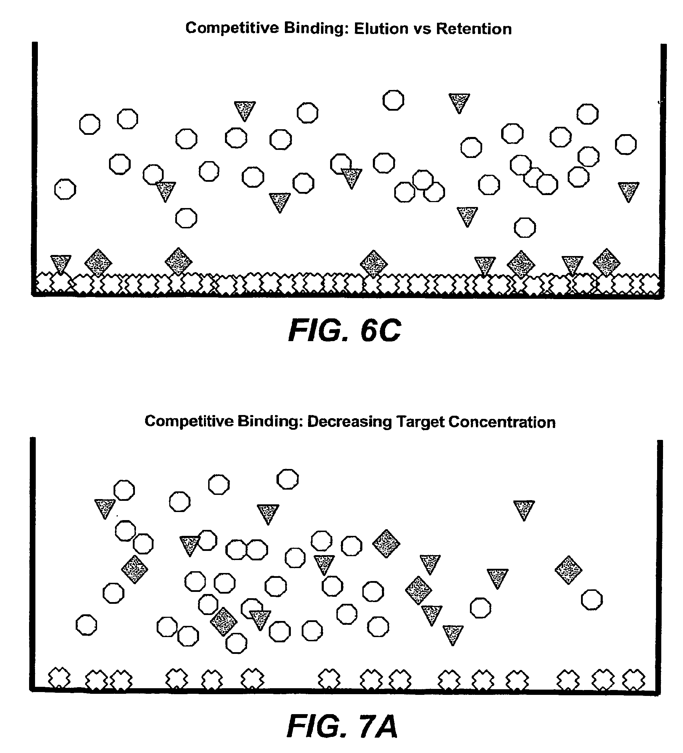

Figure 6 provides a graphic of competitive binding showing elution verses retention. Figure 6A shows binders suspended in solution, while Figure 6B shows binders bound to target, and Figure 6C shows some binders bound to target. There are three different types of binders represented, and all three require the same amount of time to stick to the target (approximately 10 seconds), but each of the three binders has a different off rate. Binders with a 1 minute off rate are represented by octagons; there are 30 such binders represented.

Binders with a 10 minute off rate are represented by a triangle; there are 10 such binders represented. Binders with a 100 minute off rate are represented by a square tilted 45 degrees; there are 5 such binders represented. The target is shown at the bottom of the Figures as an "X." Thus, in sum, Figure 6 shows binding of three classes of binders to an immobilized target.

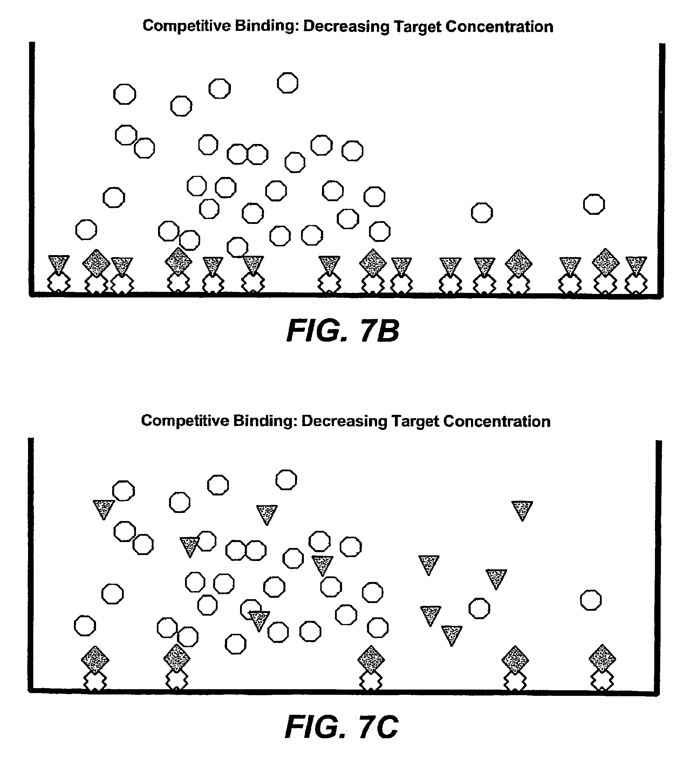

Figure 7 shows the effect of decreasing target concentration. Figure 7A shows binders suspended in solution, while Figure 7B shows binders bound to target. The molecules with the slowest off rate (the two types of molecules with the lowest concentration) are bound. Figure 7C shows some binders, only the binders with the slowest off rate (at the lowest concentration) bound to target. There are three different types of binders represented, and all three require the same amount of time to stick to the target (approximately 10 seconds), but each of the three binders has a different off-rate. Binders with a 1 minute off rate are represented by octagons; there are 30 such binders represented. Binders with a 10 minute off rate are represented by a triangle; there are 10 such binders represented. Binders with a 100 minute off rate are represented by a square tilted 45 degrees; there are 5 such binders represented. Target is shown at the bottom of the figure as an "X." Thus, Figure 7 provides an example of binding of three classes of binders to an immobilized target when the amount of the target is limiting or decreased.

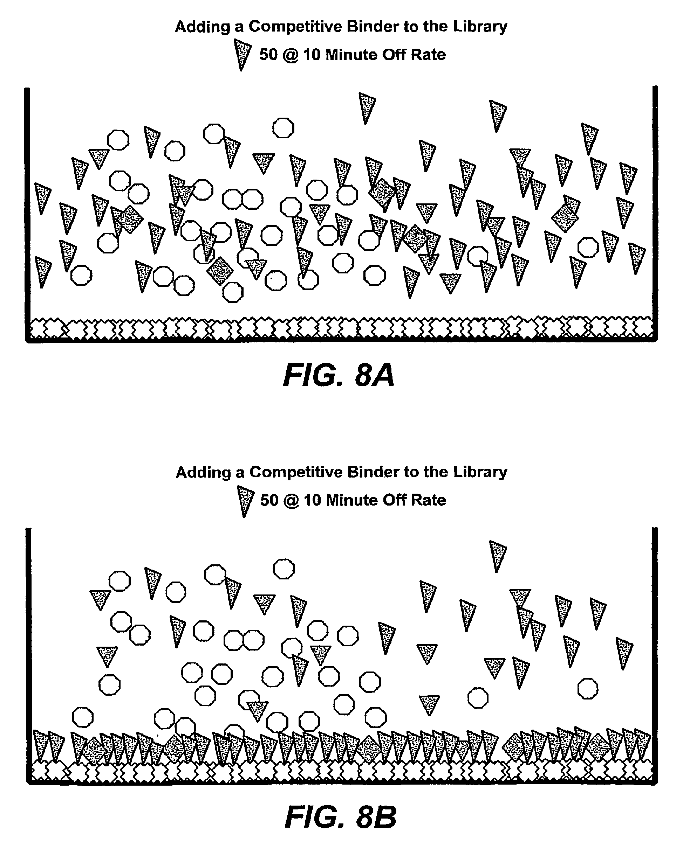

Figure 8 shows the effect of adding competitive binders to a library. Figure 8A shows binders suspended in solution, while Figure 8B shows competitive binding involving binders with a high concentration and slow off rate sticking to the target. There are four different types of binders in the library. While all four require the same amount of time to stick to the target (approximately 10 seconds), each of the three represented binders has a different off-rate. Binders with a 1 minute off rate are represented by octagons; there are 30 such binders represented. Binders with a 10 minute off rate are represented by isosceles and long triangles; there 10 binders represented as an isosceles triangle and 50 binders represented by a long triangle. Binders with a 100 minute off rate are represented by a square tilted 45 degrees; there are 5 such binders represented. Target is shown at the bottom of the figure as an "X." Thus, this Figure shows binding of three classes of binder to an immobilized target when a competitive binder is limiting.

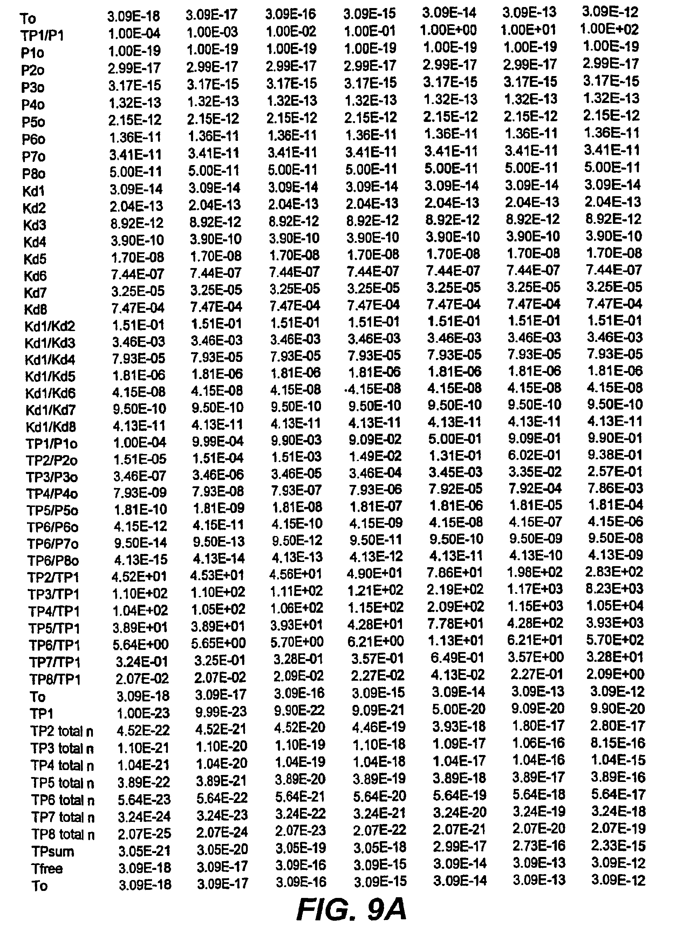

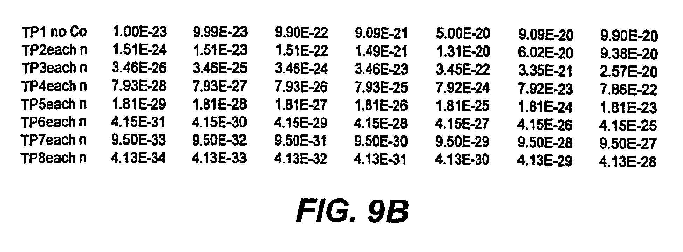

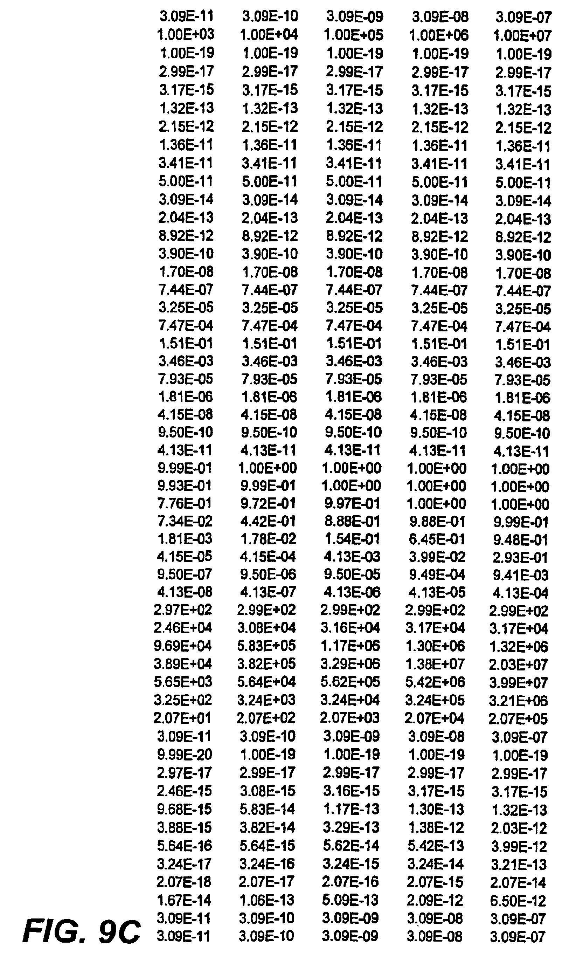

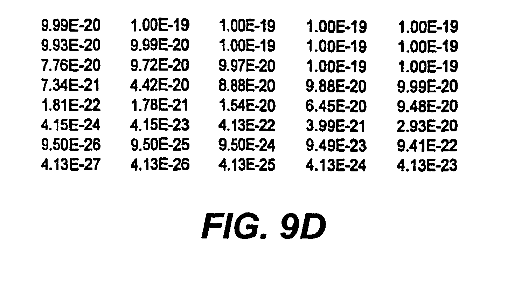

Figure 9 provides the results of calculations for manipulating concentrations or for providing a manipulated concentration. Given a library concentration (Molar)(and a mean binding energy (delta G: Kcal/mol) for that library to the target, the expected number of library members P1-P8 within each standard deviation from the mean are calculated from the binomial (normal) distribution. An average binding energy is calculated for each member and a dissociation constant $K_D = e^{\Delta G/RT}$ is calculated for each member. All library members with binding energies weaker or equal to the mean are lumped into one group.

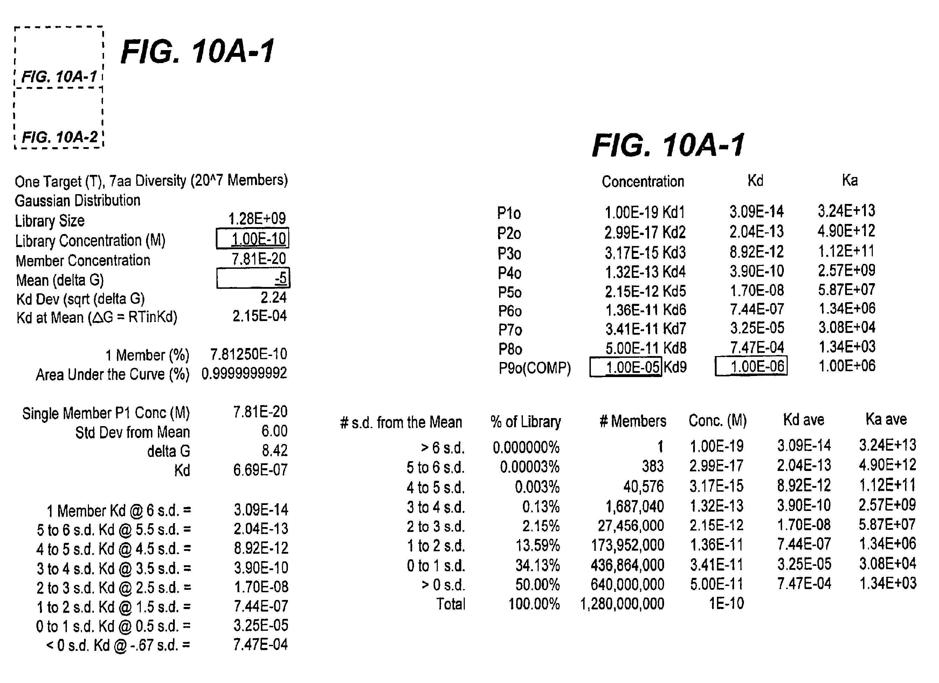

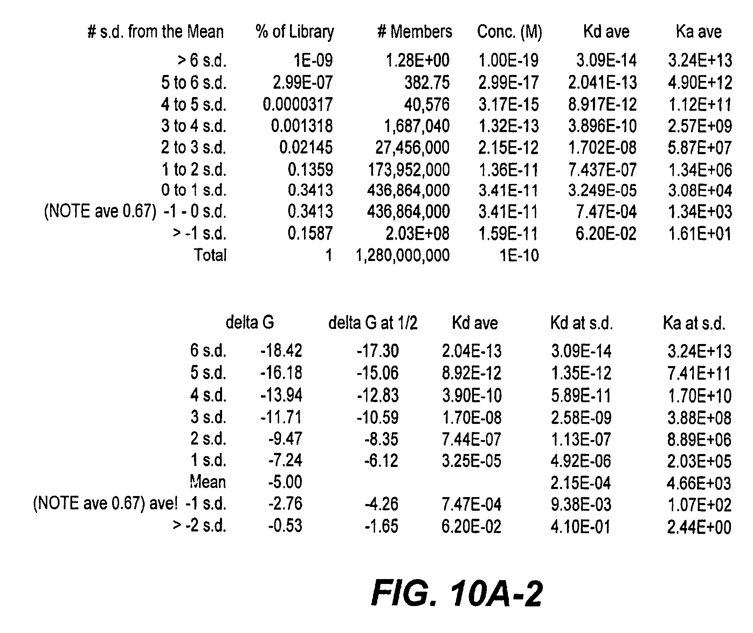

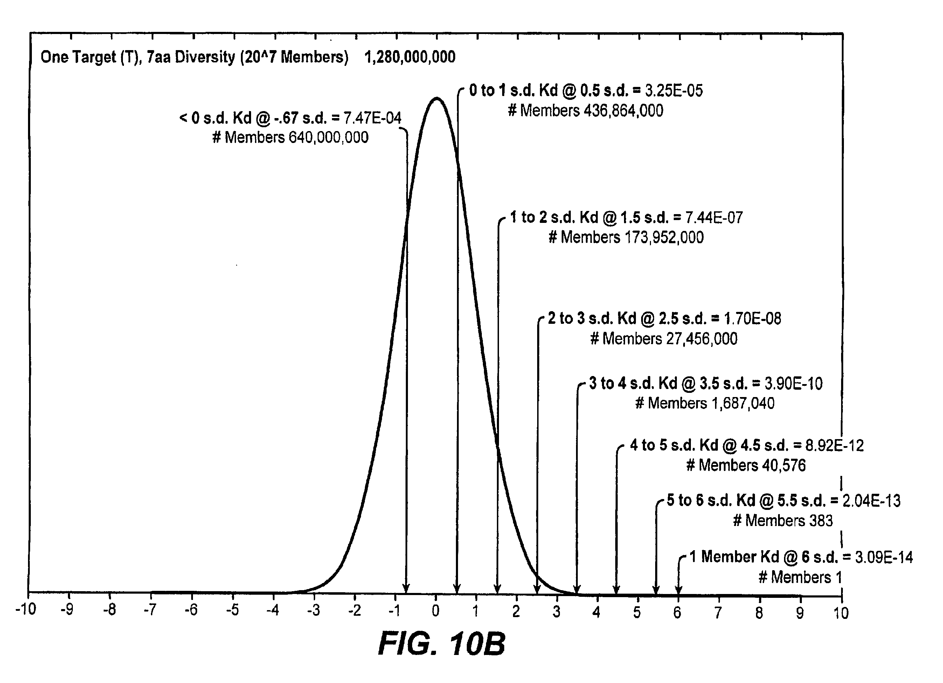

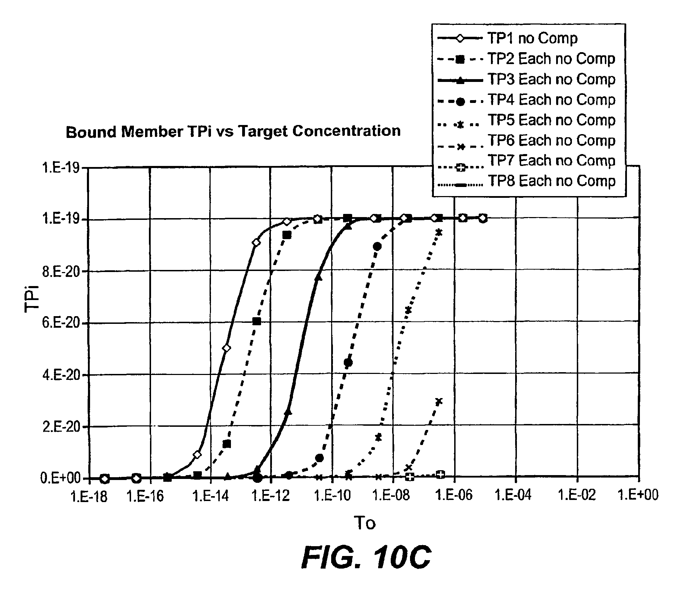

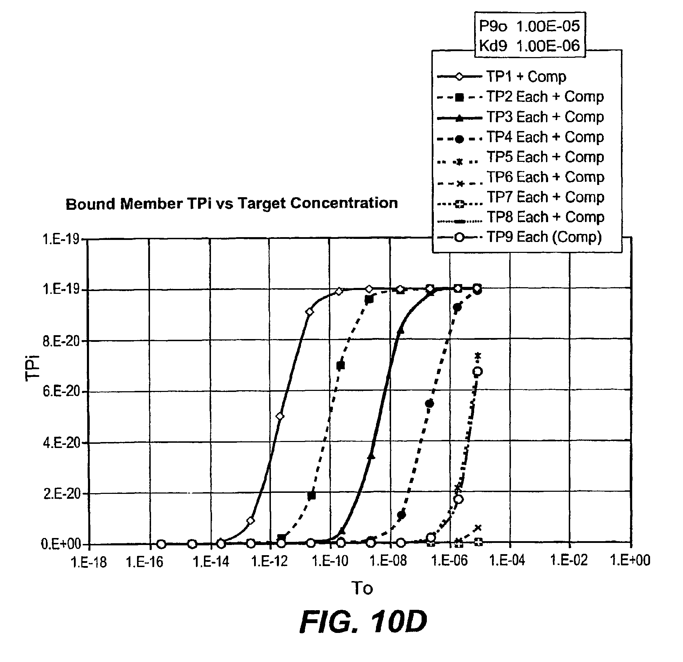

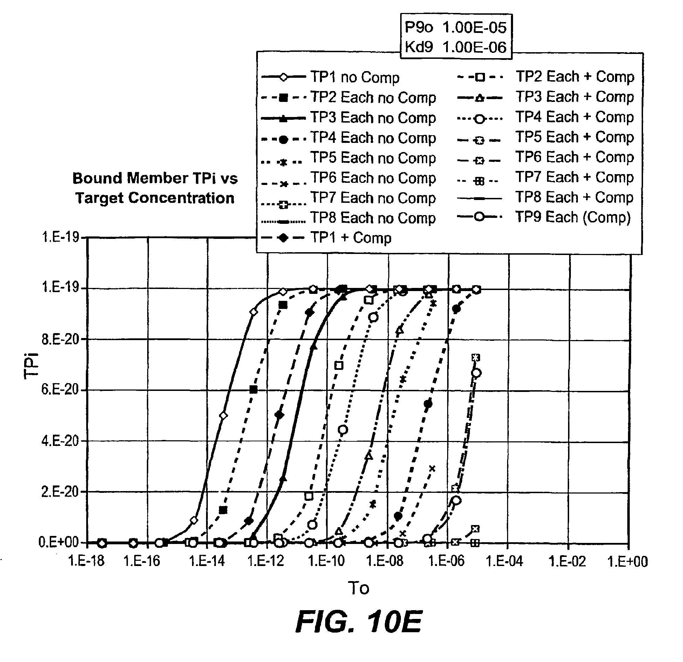

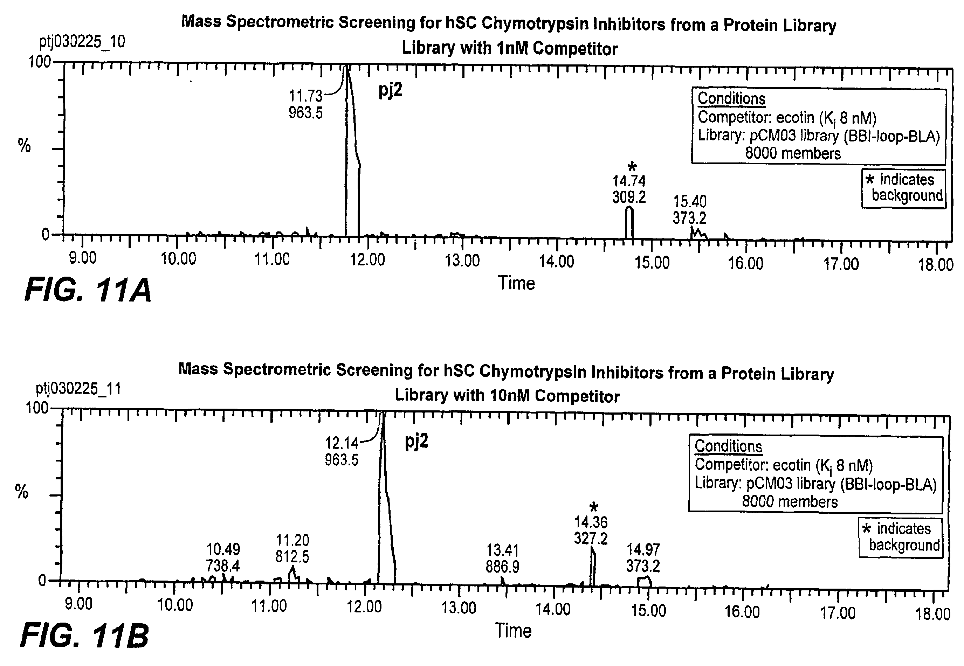

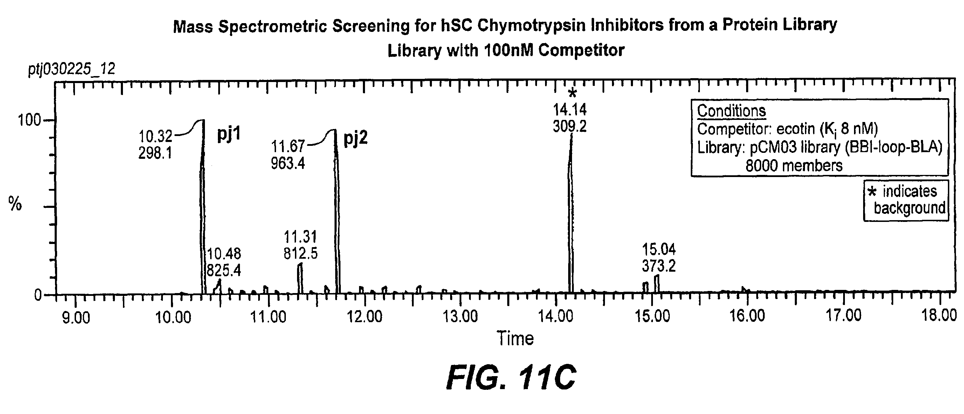

Figure 10 provides an example of a sample calculation for a polypeptide library having seven amino acid positions fully varied and charts resulting from those calculations. Figure 10A provides an example sample calculation for a polypeptide having seven amino acids, while Figure 10B provides a curve that predicts standard deviations based upon the calculation above, Figure 10C provides a graph charting bound library member verses target with no competitor, according to the calculation above, Figure 10D provides a graph charting bound library member versus target with competitor, according to the calculation above, and Figure 10E combines the plots of Figures 10C and 10D. Figure 11 provides chromatograms from a mass spectrometric screening for hSC chymotrypsin inhibitors from a protein library, as described in Example 3.

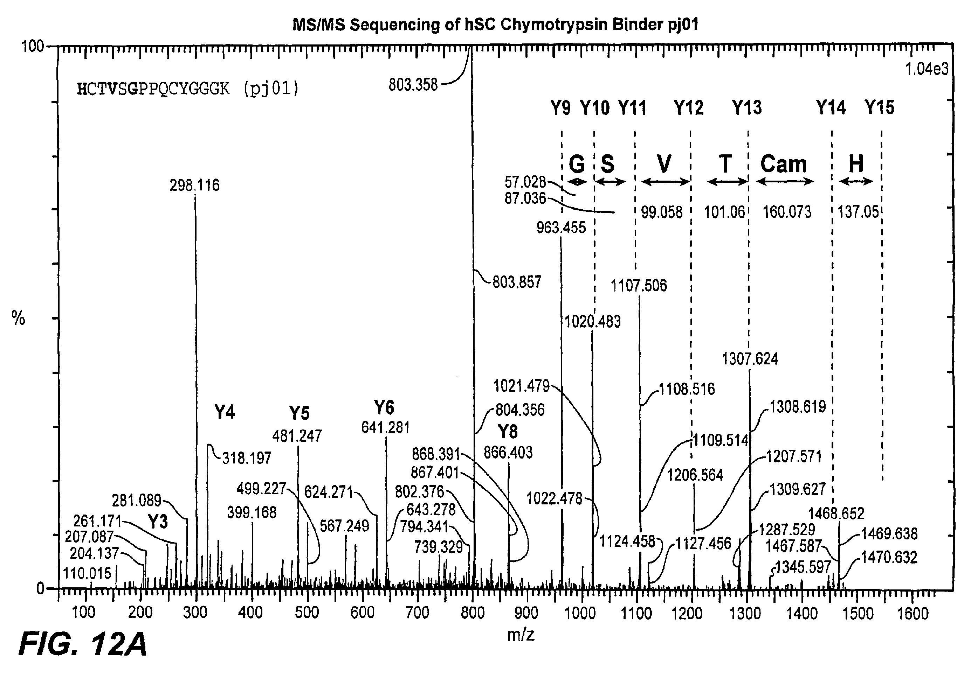

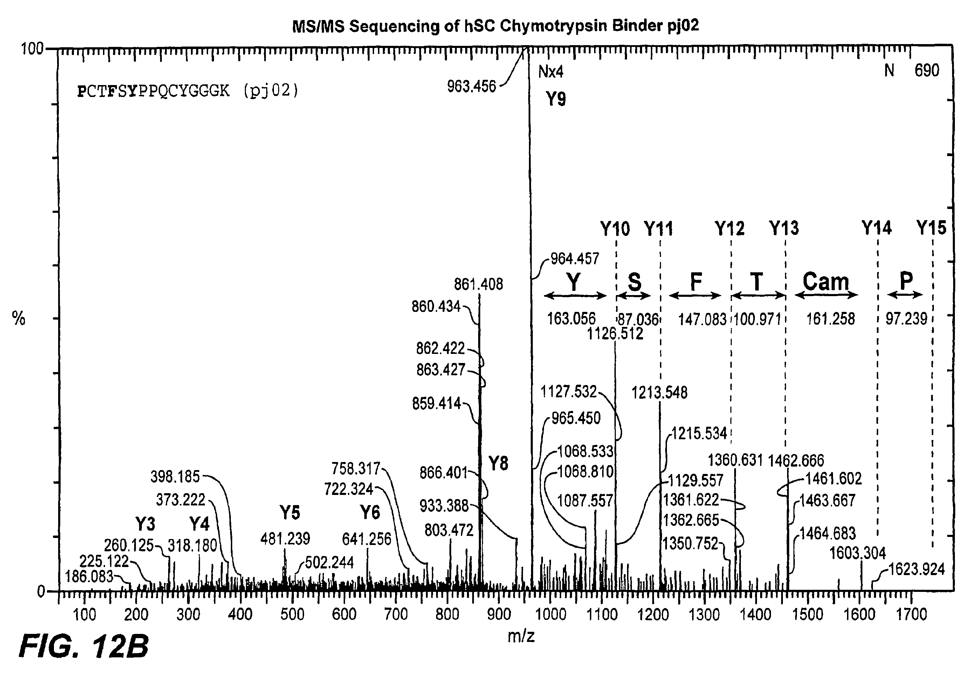

Figure 12 provides MS/MS sequencing of hSC chymotrypsin binders as described in Example 3. Figure 12A shows binder pj01, while Figure 12B shows binder pj02.

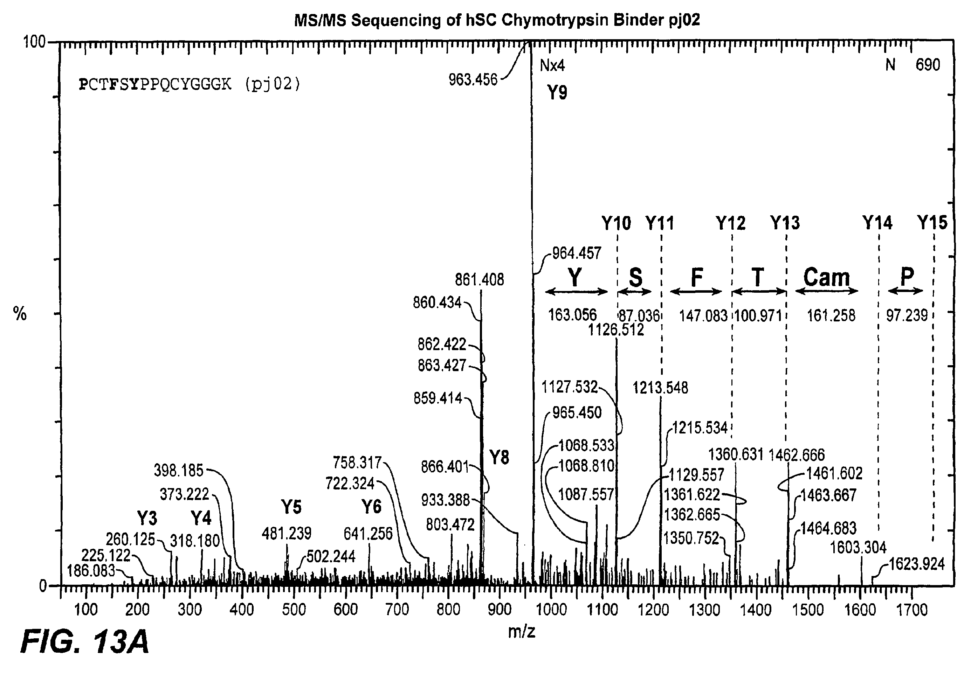

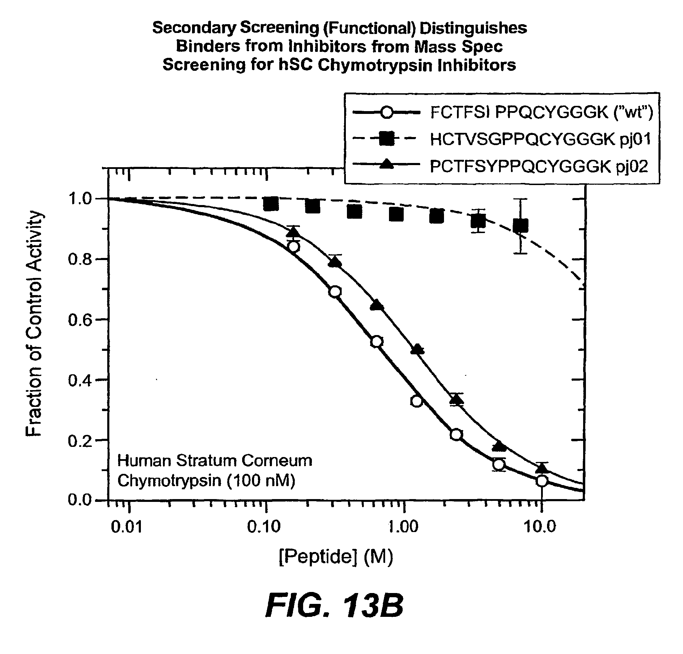

Figure 13 provides secondary functional screening and distinguishes binders from inhibitors, from mass spectrometric screening for hSC chymotrypsin inhibitors as set forth in Example 3.

## DESCRIPTION OF THE INVENTION

The present invention provides methods for screening for compounds of interest. In particular, the present invention provides methods for competitive differential screening. In some preferred embodiments, the present invention provides methods for competitive differential screening that facilitate the identification of tight binders. In some preferred embodiments, the agents used in the methods of the present invention comprise tight and weak binders. In other embodiments, the present invention provides methods that utilize competitive binders that recognize and bind targets, but with binding that is less strong than that of binders of interest.

Definitions

Unless defined otherwise herein, all technical and scientific terms used herein have the same meaning as commonly understood by one of ordinary skill in the art to which this invention pertains. For example, Singleton and Sainsbury, Dictionary of Microbiology and Molecular Biology, 2d Ed., John Wiley and Sons, NY (1994); and Hale and Marham, The Harper Collins Dictionary of Biology, Harper Perennial, NY (1991) provide those of skill in the art with general dictionaries of many of the terms used in the invention. Additional references widely known to those in the art include Sambrook et al., Molecular Cloning: A Laboratory Manual, 2nd ed., Cold Spring Harbor Laboratory Press, New York [1989], and Ausubel et al., Current Protocols in Molecular Biology, Greene-Publishing & Wiley Interscience NY (1987; supplemented through 1999).

Although various methods and materials similar or equivalent to those described herein find use in the practice of the present invention, preferred methods and materials are described herein. Accordingly, the terms defined immediately below are more fully described by reference to the Specification as a whole. Also, as used herein, the singular "a," "an," and "the" include the plural reference unless the context clearly indicates otherwise.

Generally, the nomenclature used, and standard laboratory procedures such as cell culture, molecular genetics, and nucleic acid chemistry and hybridization, are well known and commonly employed in the art. Standard techniques are used for recombinant nucleic acid methods, polynucleotide synthesis, microbial culture, cell culture, tissue culture, transformation, transfection, transduction, analytical chemistry, organic synthetic chemistry, chemical syntheses and chemical analysis. Generally, enzymatic reactions and purification and/or isolation steps are performed according to the manufacturers' specifications.

The term "agent," refers to any binder (*e.g.*, peptide, polypeptide, protein or nucleic acid), that binds to a target molecule on or in a target. A nucleic acid may be DNA and/or RNA. In either case, the nucleic acid may be single- or double-stranded. The term encompasses ligands that recognize a particular target molecule, as well as peptide derivatives, peptidomimetics, peptoids, small organic molecules, carbohydrates, and other molecules that are isolated from a candidate mixture that acts on a target molecule in a desirable manner. As used herein, the term "agent" is not confined to a particular molecular size or compositional feature. In some embodiments, agents serve as substrate for an enzyme-catalyzed reaction, while in other embodiments, agents are agonists, antagonists, and/or signal messengers. In some embodiments, agents stimulate or inhibit metabolic pathways. In alternative embodiments, agents are peptides or polypeptides expressed on the surface of a phage as part of the phage coat protein, as is routinely done for phage display screening methods.

In some embodiments, agents bind to target molecules. In some embodiments, the agents catalytically change the target molecules. Similarly, in alternative embodiments, agents react with target molecules, resulting in modification or alteration of the target molecules. In yet further embodiments, agents are modified to facilitate isolation of the agent or an agent-target molecule complex. In additional embodiments, a "tag" (*e.g.*, biotin), is attached in at least one location on the agent or target to facilitate isolation of novel, bound agent-target complexes using streptavidin. In alternative embodiments, agents are linked to a chelating compound or a metal so as to facilitate isolation by chelation or magnetic field. In yet further embodiments, agents are directly or indirectly linked to a reporter or another marker. In additional embodiments, agents are modified or manipulated so as to change their shape or conformation. In still further embodiments, agents have a binding affinity for a target molecule somewhere in the range typical of the binding affinity of antibody for a selected ligand.

The binding affinity of an agent (or anti-agent) for its target (or anti-target) is often described by the dissociation constant (Kd), the concentration needed for 50% effective binding (EC50), or concentration needed for 50% inhibition of binding of another compound that binds to the target (IC50). Ko is defined by $k_{off}/k_{on}$. The $k_{off}$ value defines the rate at which the target/ligand complex breaks apart or separates; the $k_{on}$ value describes the rate at which the agent and target molecule combine to form the agent-target molecule complex. Binding affinity terms are sometimes referred to in the art as the kinetic stability of the agent-target molecule complex or the ratio of any other measurable quantity that reflects the ratio of binding affinities. Selectivity is defined either by the ratio of binding affinities or by the ratio of off rates for the agent-complex (*e.g.*, target molecule Kd/anti-target molecule Kd). In some embodiments, it is desirable to increase $K_{on}$, while in other embodiments, it is desirable to decrease $K_{off}$, and in still further embodiments, it is desirable to do both.

As used herein, "anti-target" refers to an agent that has previously been identified as binding to a target and is typically amplified, to produce a collection of binders. In some embodiments, the anti-target is a nucleic acid (single- or double-stranded DNA and/or RNA). For convenience herein, the term "agent" is used in the following Examples to refer to both "agents" (*i.e.*, molecules that bind to target molecules) and "anti-targets" (anti-target agents). Thus, "agent" encompasses ligands that recognize a particular target or anti-target molecules.

As used herein, "collection" refers to a group of objects to be observed, studied, utilized and/or kept together. Thus, the term encompasses a collection of agents to which a target population is exposed.

As used herein, "type" refers to an agent that can be differentiated from other agents. In some preferred embodiments, a type is differentiated by binding affinity, or Kd, from another type of agent by its binding affinity. As a non-limiting example, in some embodiments of the present invention, three different types of binders include three classes of agents that have, roughly, three different binding affinities. A pictorial example of types is provided in the Figures (*e.g.*, Figure 7 shows three types of binders, binders with a 1 minute off rate, binders with a 10 minute off rate, and binders with a 100 minute off rate).

As used herein, "protein of interest," refers to a protein which is being analyzed, identified and/or modified. Naturally-occurring, as well as recombinant proteins find use in the present invention.

As used herein, "protein" refers to any composition comprised of amino acids and recognized as a protein by those of skill in the art. The terms "protein," "peptide" and polypeptide are used interchangeably herein. Wherein a peptide is a portion of a protein, those skilled in the art understand the use of the term in context. The term "protein" encompasses mature forms of proteins, as well as the pro- and prepro-forms of related proteins. Prepro forms of proteins comprise the mature form of the protein having a prosequence operably linked to the amino terminus of the protein, and a "pre-" or "signal" sequence operably linked to the amino terminus of the prosequence. It is intended that the terms also encompass such sequences as those of antibodies.

Families of amino acid residues having similar side chains have been defined in the art. These families include amino acids with basic side chains (*e.g.*, lysine, arginine, histidine), acidic side chains (*e.g.*, aspartic acid, glutamic acid), uncharged polar side chains (*e.g.*, asparagine, glutamine, serine, threonine, tyrosine), nonpolar side chains (*e.g.*, alanine, valine, leucine, isoleucine, proline, phenylalanine, methionine, tryptophan, cysteine, glycine), beta-branched side chains (*e.g.*, threonine, valine, isoleucine) and aromatic side chains (*e.g.*, tyrosine, phenylalanine, tryptophan, histidine). Standard three-letter or one-letter amino acid abbreviations, as known in the art, are used herein. Equivalent substitutions may be included within the scope of the claims (*e.g.*, a substitution of an amino acid for another amino acid from the same group).

In some embodiments, the peptides, polypeptides and/or proteins of the invention comprise one or more non-classical amino acids. "Non-classical amino acids" include, but are not limited to the D-isomers of the common amino acids, α-amino isobutyric acid, 4-aminobutyric acid (4-Abu), 2-aminobutyric acid (2- Abu), 6-amino hexanoic acid (Ahx), 2-amino isobutyric acid (2-Aib), 3-amino propionoic acid, ornithine, norleucine, norvaline, hydroxyproline, sarcosine, citrulline, cysteic acid, t-butylglycine, t-butylalanine, phenylglycine, cyclohexylalanine, ß-alanine, fluoro-amino acids, "designer" amino acids such as ß-methyl amino acids, Cα-methyl amino acids, Nα-methyl amino acids, and amino acid analogs in general.

"Antibody" (Ab) and "immunoglobulin" (Ig) as used herein, refer to defined as a glycoprotein produced by B cells and plasma cells of humans and other animals, that binds with high specificity to an antigen (usually, but not always, a peptide) or a structurally similar antigen, that generated its production. Antibodies may be produced by any of the known methodologies and may be either polyclonal or monoclonal. The term also encompasses chimeric antibodies, humanized antibodies, immunoglobulins or antibody or functional fragments of an antibody that bind to an antigen. Examples of such functional entities include complete antibody molecules, antibody fragments, such as Fv, single chain Fv, complementarity determining regions (CDRs), $V_L$ (light chain variable region), $V_H$ (heavy chain variable region), and any combination of those or any other functional portion of an immunoglobulin peptide capable of binding to target antigen.

The antibodies used in the present invention may be prepared using various immunogens. Various procedures known in the art may be used for the production of polyclonal antibodies. In some embodiments for the production of antibody, various host animals (including, but not limited to rabbits, mice, rats, sheep, goats, etc.) are immunized by injection with the peptide corresponding to a target of interest in the present invention. In some preferred embodiments, the peptide is conjugated to an immunogenic carrier (*e.g.*, diphtheria toxoid, bovine serum albumin (BSA), or keyhole limpet hemocyanin [KLH]). Various adjuvants may be used to increase the immunological response, depending on the host species, including but not limited to Freund's (complete and incomplete), mineral gels such as aluminum hydroxide, surface active substances such as lysolecithin, pluronic polyols, polyanions, peptides, oil emulsions, keyhole limpet hemocyanins, dinitrophenol, and potentially useful human adjuvants such as BCG (Bacille Calmette-Guerin) and *Corynebacterium parvum.*

For preparation of monoclonal antibodies, any technique that provides for the production of antibody molecules by continuous cell lines in culture may be used (*See, e.g.,* Harlow and Lane, Antibodies: A Laboratory Manual, Cold Spring Harbor Laboratory Press, Cold Spring Harbor, NY). These include but are not limited to the hybridoma technique originally developed by Köhler and Milstein (Köhler and Milstein, Nature 256:495-497 [1975]), as well as the trioma technique, the human B-cell hybridoma technique (*See e.g.,* Kozbor et al. Immunol. Today 4:72 [1983]), and the EBV-hybridoma technique to produce human monoclonal antibodies (*See e.g.,* Cole et al., in Monoclonal Antibodies and Cancer Therapy, Alan R. Liss, Inc., pp. 77-96 [1985]). In some particularly preferred embodiments of the present invention, the present invention provides monoclonal antibodies of the IgG class.

In an additional embodiment of the invention, monoclonal antibodies are produced in germ-free animals (*See e.g.,* PCT/US90/02545). According to the invention, human antibodies find use and can be obtained by using human hybridomas (*See e.g.,* Cote et al., Proc. Natl. Acad. Sci. U.S.A.80:2026-2030 [1983]) or by transforming human B cells with EBV virus in vitro (*See e.g.,* Cole *et al.*, *supra*).

Techniques described for the production of single chain antibodies (U.S. Patent 4,946,778; herein incorporated by reference) find use in the production of single chain antibodies that specifically recognize a molecule of interest. In some embodiments, the techniques described for the construction of Fab expression libraries (*See e.g.,* Huse et al., Science 246:1275-1281 [1989]) are used to allow rapid and easy identification of monoclonal Fab fragments with the desired specificity.

Antibody fragments which contain the idiotype (antigen binding region) of the antibody molecule can be generated by known techniques. For example, such fragments include but are not limited to: the F(ab')2 fragment which can be produced by pepsin digestion of the antibody molecule; the Fab' fragments which can be generated by reducing the disulfide bridges of the F(ab')2 fragment, and the Fab fragments which can be generated by treating the antibody molecule with papain and a reducing agent.

In the production of antibodies, screening for the desired antibody can be accomplished by techniques known in the art (*e.g.*, radioimmunoassay, ELISA [enzyme-linked immunosorbent assay], "sandwich" immunoassays, immunoradiometric assays, gel diffusion precipitin reactions, immunodiffusion assays, *in situ* immunoassays [using colloidal gold, enzyme or radioisotope labels, for example], Western Blots, precipitation reactions, agglutination assays (*e.g.*, gel agglutination assays, hemagglutination assays, etc.), complement fixation assays, immunofluorescence assays, protein A assays, and immunoelectrophoresis assays, etc.

In one embodiment, antibody binding is detected by detecting a label on the primary antibody. In another embodiment, the primary antibody is detected by detecting binding of a secondary antibody or reagent to the primary antibody. In a further embodiment, the secondary antibody is labeled. Many means are known in the art for detecting binding in an immunoassay and are within the scope of the present invention.

"Staining," as used herein, refers to any number of processes known to those in the field that are used to better visualize a specific component(s) and/or feature(s) of a cell or cells.

The term "oligonucleotide" as used herein is defined as a molecule comprised of two or more deoxyribonucleotides or ribonucleotides. The exact size depends upon many factors, which in turn depend on the ultimate function or use of the oligonucleotide. Oligonucleotides can be prepared by any suitable method, including, for example, cloning and restriction of appropriate sequences and direct chemical synthesis by any suitable method known in the art, such as the phosphotriester method (*See*, Narang et al., Meth. Enzymol., 68:90-99 [1979]); the phosphodiester method (*See e.g.*, Brown *et al.*, Meth.

Enzymol., 68:109-151 [1979]); the diethylphosphoramidite method (*See*, Beaucage et al., Tetrahedron Lett. 22:1859-1862 [1981]), and solid support methods (*See e.g.,* U.S. Pat. No. 4,458,066). Various useful reviews of synthesis methods are known to those in the art (*See e.g.,* Goodchild, 1990, Bioconjugate Chemistry 1(3):165-187 [1990]). The above references are incorporated herein by reference.

As used herein, the term "peptoid" refers to an enzymatically resistant peptide analog.

As used herein, the terms "contact" and "expose" mean placing a collection of agents and target molecules in immediate proximity or association and includes *in vitro* and *in vivo* contact. The terms include touching, associating, joining or combining. The term is also used in reference to anti-targets.

The term "separating" means to select, segregate, partition, isolate, collect, keep apart and disunite.

The terms "amplifying" and "amplify" refer to any process or combination of process steps that increases the amount or number of copies of a molecule or class of molecules. As an example, in some embodiments, each member of the collection of agents or anti-target agents is present at levels that are about 100-fold, about 500-fold, about 1000-fold, about 5000-fold, about 10,000-fold, about 100,000-fold, or about 1,000,000-fold greater than those prior to amplification.

The term "low concentration" refers to concentrations of target that are from about 1,000 fold higher to about 10 fold lower than the concentration obtained by calculation of the desired dissociation constant of library member to the target. Low concentrations may be concentrations, for example, at or below about ten times the desired disassociation constant for binding of the library member to the target. In some embodiments, preferred concentrations are between about 1 micromolar (1e-6M) and between about 1 picomolar (1e-12M), preferably any concentration between about 1e-7 and about 1e-11.

As used herein, "manipulated concentration" refers to a concentration, especially a concentration of a target population that has been manipulated to achieve the desired effects of the invention. In some embodiments, manipulation involves increasing or decreasing concentration of a target population, for example, so that the target population has a concentration relative in proportion to other concentration. In some embodiments, manipulated concentrations include an increased library concentration, a decrease in diversity of library that increases the concentration of each member of the library, and/or a decreased target concentration.

The term "normal" refers to an entity in a state that lacks observable and/or detectable abnormalities or deficiencies. Thus, a normal cell is one that conforms with, or adheres to, a typical, standard, pattern of expression, level of expression, consistent with the phenotype and genotype of an unaltered cell of its own type. Conversely, "abnormal" means not typical, usual or regular, not normal. Thus, a diseased cell is an "abnormal" cell type.

The term "target" refers to a substance of interest to which an agent or agent population according to the invention is exposed. In some embodiments, the target is incubated for a desired period of time.

In additional embodiments, the biological surface is a surface of an organ, while in alternative embodiments, the biological surface is the surface of a cell or a tissue. In some further embodiments, the biological surface is a surface of a diseased organ, tissue or cell, while in some alternative embodiments, the biological surface is a surface of a normal or healthy organ, tissue or cell.

In yet further embodiments, the surface is a macromolecule in the interstitial space of a tissue. In additional embodiments, the biological surface is the surface of a microorganism, including but not limited to bacteria, fungi, viruses, parasites (helminths, protozoans, etc.). In some embodiments, the microorganism is an animal pathogen, while in other embodiments, the microorganism is non-pathogenic for humans and/or other animals. Sources of cells and/or tissues include humans, non-human animals, bacteria, fungi, and plants.

Thus, it is contemplated that any biological surface (*e.g.*, cells, tissues, skin, nails, internal organs, external organs, and/or hair) will find use as targets in the present invention. In some embodiments, the cells are human, while in alternative embodiments, the cells are non-human animal cells, bacterial cells, or fungal cells. The term also encompasses cells that contain viruses and/or viral particles. In some embodiments, the cells are hematopoietic cells, cancer cells, or retroviral-mediated transduced cells.

In alternative embodiments, the target is a blood cell, including hematopoietic cells (*e.g.*, hematopoietic stem cells, as well as the various immature cells in the erythrocytic, thromobocytic, and leukocytic lineages. "Blood cells" include but are not limited to hematopoietic cells, erythrocytes, neutrophils, monocytes, platelets, mast cells, eosinophils, basophils, lymphocytes, B cells, T cells, plasma cells, mast cells, macrophages and natural killer cells. In some embodiments, the target is an abnormal blood cell. In some embodiments, the HSC targets have a surface antigen expression profile of CD34$^+$ Thy-1$^+$ or CD34$^+$ Thy-1$^+$ Lin$^-$ ("Lin$^-$" refers to a cell population selected on the basis of the lack of expression of at least one lineage specific marker). Methods for isolating and selecting HSCs are well known in the art (*See e.g.,* U.S. Patent Nos. 5,061,620, 5,677,136, and 5,750,397).

In other embodiments, the target is a molecule. In some embodiments, the molecule is an organic molecule. In further embodiments, the molecule is a biological molecule. In additional embodiments, the biological molecule is a cell-associated molecule. In still further embodiments, the cell-associated molecule is associated with the outer surface of a cell. In some embodiments, the cell-associated molecule is part of the extracellular matrix. In some additional embodiments, the cell-associated molecule is a protein. In some embodiments, the protein is a receptor. In additional embodiments, the cell-associated molecule is specific to a particular cell type. In further embodiments, the cell is a diseased and/or abnormal cell. In some preferred embodiments, the diseased cell is a cancer cell. In another embodiment, the diseased cell is an infected cell. Additional molecules that find use as targets in the present invention include, but are not limited to, proteins, peptides, nucleic acids, carbohydrates, lipids, polysaccharides, glycoproteins, hormones, receptors, antigens, antibodies, toxic substances, metabolites, inhibitors, drugs, dyes, nutrients and growth factors.

Non-limiting examples of protein and chemical targets encompassed by the present invention include chemokines and cytokines and their receptors. The term "cytokine" as used herein, refers to any of the numerous factors that exert a variety of effects on cells (*e.g.*, inducing growth, differentiation, and/or proliferation). Non-limiting examples include interleukins (IL), such as IL-2, IL-3, IL-4 IL-6, IL-10, IL-12, IL-13, IL-14 and IL-16; soluble IL-2 receptor; soluble IL-6 receptor; erythropoietin (EPO); thrombopoietin (TPO); granulocyte macrophage colony stimulating factor (GM-CSF); stem cell factor (SCF); leukemia inhibitory factor (LIF); interferons (*e.g.*, IFN-alpha, -beta, and -gamma); oncostatin M (OM); the immunoglobulin superfamily; tumor necrosis factor (TNF) family, particularly TNF-$\alpha$; transforming growth factors, (*e.g.*, TGF-alpha and TGF-beta); and IL-1$\alpha$; and vascular endothelial growth factor (VEGF) family, particularly VEGF (also referred to in the art as VEGF-A), VEGF-B, VEGF-C, VEGF-D and placental growth factor (PLGF). Cytokines are commercially available from several vendors including Amgen (Thousand Oaks, CA), Immunex (Seattle, WA) and Genentech (South San Francisco, CA).

As used herein, the term "tissue" refers to a group or layer of similarly specialized cells which together perform certain specialized functions. In some tissues, cells of only one type are present, while in other tissues, cells of different types are present. The term includes but is not limited to lymphoid, lymphadenoid, adipose, bony, aerolar, cartilaginous, connective, elastic, endothelial, epithelial, fibrous, glandular, gut-associated lymphoid (GALT), indifferent, interstitial, reticular, mesenchymal, myeloid, muscular, nervous, osseous, skeletal, subcutaneous, and other tissue types. As used herein, the term also encompasses modified tissues.

The term "target population" refers to a collection of targets of interest to which an agent or agent population is exposed. A target population may include a single target or a collection of targets, as described herein. Any collection of biological surfaces, including; but not limited to cells, tissues, skin, nails, and/or hair find use as target populations in the present invention.

In some embodiments, target populations include a group of cancerous cells, cell lines or cell cultures, tumor extracts or cancerous tissues or organs, molecules associated with cancerous cells, cell lines or cell cultures, tumor extracts or cancerous tissues or organs, or cells, cell lines or cell cultures, tissues or organs associated with cancerous cells, cell lines or cell cultures, tumor extracts or cancerous tissues or organs. In some embodiments, target populations include antigens or collections of antigens, themselves. Non-limiting examples of target populations may be found, below.

In some preferred embodiments, the target is a "cancer-related target." The term includes any target that a composition of the invention binds to as part of the diagnosis or detection of a cancer or cancer-associated condition in an organism. For example, the term includes cancerous cells, tissues and/or organs; molecules associated with cancerous cells, tissues or organs; and/or molecules, cells, tissues or organs that are associated with cancerous cells, tissues or organs (*e.g.*, a tumor-bound diagnostic molecule administered to a subject) as well as biopsy samples taken from a subject, or a healthy tissue (*e.g.*, vasculature that is associated with cancerous tissue). Examples of cancer-related targets are provided in U.S. Pat. No. 6,261,535, which is incorporated herein by reference in its entirety. However, it is not intended that the present invention be limited to any specific cancer-related targets. The cancer-related target can be related to any cancer or cancer-associated condition. Examples of types of cancers include, but are not limited to carcinomas, sarcomas, myelomas, leukemias, lymphomas, and mixed type cancers.

The term "molecule" refers to target molecules (*e.g.*, an antigen or a ligand), an agent and/or an anti-target molecule. Suitable agent, target molecules and anti-target molecules include, but are not limited to, proteins, peptides, nucleic acids, carbohydrates, lipids, polysaccharides, glycoproteins, hormones, receptors, antigens, antibodies, viruses, pathogens, toxic substances, metabolites, inhibitors, drugs, dyes, nutrients, growth factors, cells or tissues.

The present invention provides competitive differential screening assays. The invention increases the proportion of agents obtained after a final round of screening and elution that bind specifically to particular targets. This increases the signal-to-noise ratio of desired target molecules to undesired molecules (*e.g.*, anti-target molecules) on, or in, a target surface or suspension so that at least one agent (*e.g.*, a binder) is isolated through use of screening assays. As a result, the assay facilitates the isolation of higher quality and tighter binders.

## DETAILED DESCRIPTION OF THE INVENTION

The present invention provides methods for screening for compounds of interest. In particular, the present invention provides methods for competitive differential screening. In some preferred embodiments, the present invention provides methods for competitive differential screening that facilitate the identification of tight binders. In some preferred embodiments, the agents used in the methods of the present invention comprise tight and weak binders. In other embodiments, the present invention provides methods that utilize competitive binders that recognize and bind targets, but with binding that is less strong than that of binders of interest.

The particularly preferred embodiments, the present invention provides means to increase the proportion of agents obtained after a final round of screening and elution that bind specifically to particular targets. This increases the signal-to-noise ratio of desired target molecules to undesired anti-target molecules on, or in, a target surface or suspension, facilitating isolation of at least one binder.

Described herein are methods for isolating at least one binder of interest, the method comprising the steps of: contacting a target population with a collection of agents, the collection of agents having a manipulated concentration; washing off agents that do not bind to the target population; and distinguishing, separating and identifying the at least one binder.

In some embodiments, the present invention provides methods for isolating at least one binder of interest, comprising: contacting a first target with a first collection of agents; washing off agents that do not bind to target molecules present in the target and discarding the washed-off agents; eluting agents bound to target molecules to produce a collection of anti-target agents; amplifying the collection of anti-target agents; applying the amplified collection of anti-target agents and the first and or a second collection of agents to a second target; washing off agents that do not bind to target molecules in the second target and distinguishing, separating and identifying at least one binder of interest, wherein said agents are peptides, polypeptides, proteins or nucleic acids.

Also described herein are methods for isolating at least one binder of interest, the method comprising the steps of: contacting a target population with a collection of agents, the collection of agents having a manipulated concentration; washing off agents that do not bind to the target population; and distinguishing, separating and identifying the at least one binder. The collection of agents may comprise at least one type of peptide. The collection of agents may comprise at least one type of nucleic acid. The type of nucleic acid may be a DNA or RNA molecule.

The manipulated concentration may be between about $1 \times 10^{-3}$ and about $1 \times 10^3$ times the concentration of the target population. The manipulated concentration may comprise a decrease in agent diversity such that each individual agent concentration increases to between about $1 \times 10^{-4}$ and about $1 \times 10^2$ times the desired dissociation constant of the agent. The manipulated concentration may include at least one competitive binder, the at least one competitive binder comprising a binder with a predetermined dissociation constant for a desired target. It is contemplated that any suitable method known to the art for manipulation of the concentration will find use .

In some preferred embodiments, the collection of agents comprises at least one type of peptide. In other preferred embodiments, the collection of agents comprises at least one type of nucleic acid. In yet another preferred embodiment, the type of nucleic acid is a DNA or RNA molecule.

In some preferred embodiments, a target population is a group of targets (*e.g.*, a group of cells or nucleic acids), each member of which contains at least one target or target molecule. In some preferred embodiments, the target population comprises a cancerous cell, cell line or cell culture, tumor extracts or a cancerous tissue or organ, a molecule associated with a cancerous cell, cell line or cell culture, tumor extracts or a cancerous tissue or organ, or a cell, cell line or cell culture, tissue or organ associated with a cancerous cell, cell line or cell culture, tumor extract or a cancerous tissue or organ.

In some embodiments, the target population comprises at least one surface or a group of surfaces. In some preferred embodiments, the surface is a biological surface. In other embodiments, the biological surface is a surface of an organ. In further embodiments, the biological surface is a surface of a tissue. In additional embodiments, the biological surface is a surface of a cell. In yet further embodiments, the biological surface is a surface of a diseased organ, tissue or cell. In other embodiments, the biological surface is a surface of a normal or healthy organ; tissue or cell. In additional embodiments, the surface is a macromolecule in the interstitial space of a tissue. In other embodiments, the biological surface is the surface of a non-pathogen or pathogen. In further embodiments, the surface is a non-biological surface. In some embodiments, the non-biological surface is a surface of a medical device. In additional embodiments, the medical device is a therapeutic device. In yet other embodiments, the therapeutic device is an implanted therapeutic device. In still further embodiments, the medical device is a diagnostic device. In other embodiments, the diagnostic device is a well or tray.

In additional embodiments, the target population is cancer-related. In some embodiments, the cancer-related target population includes any target population that a collection of agents bind to as part of the diagnosis or detection of a cancer or cancer-associated condition (*e.g.*, cancerous cells, tissues or organs, molecules associated with cancerous cells, tissues or organs, or molecules, cells, tissues or organs associated with cancerous cells, tissues or organs; *See also,* U.S. Pat. No. 6,261,535, ). In some embodiments, the cancer-related target population is related to any cancer or cancer-associated condition. Examples of types of cancers include carcinomas, sarcomas, myelomas, leukemias, lymphomas and mixed type cancers.

In some embodiments, the cancer is a bone cancer. Examples include, but are not limited to Ewing's sarcoma, osteosarcoma, rhabdomyosarcoma and other soft-tissue sarcomas. In other embodiments, the cancer is a neurological cancer, including but not limited to brain tumors, oligodendrogliomas, ependymomas, menengiomas, lymphomas, schwannomas, and medulloblastomas. In additional embodiments, the cancer is breast cancer (*e.g.*, ductal carcinoma *in situ* in the breast). In further embodiments, the cancer is prostate cancer. In still further embodiments, the cancer is an endocrine system cancer (*e.g.*, adrenal, pancreatic, parathyroid, pituitary and thyroid). In additional embodiments, the cancer is a gastrointestinal cancer, (*e.g.*, anal, colorectal, rectal, oral, linguinal, esophageal, stomach, gall bladder, gastric, liver, pancreatic, large intestine, and small intestine cancers). In further embodiments, the cancer is a gynecological cancer (*e.g.*, cervical, endometrial, uterine, fallopian, gestational trophoblastic disease, choriocarcinoma, ovarian, vaginal and vulvar). In still further embodiments, the cancer is a head and neck cancer (*e.g.*, laryngeal, oropharyngeal, parathryroid and thyroid cancer). In additional embodiments, the cancer is a leukemic cancer (*e.g.*, acute lymphocytic leukemia, acute myelogenous leukemia, chronic lymphocytic leukemia, chronic myelogenous leukemia, hairy cell leukemia and/or a myeloproliferative disorder). In still further embodiments, the cancer is a lung cancer (*e.g.*, mesothelioma, non-small cell lung cancer, and small cell lung cancer). In additional embodiments, the cancer is a lymphoma (*e.g.*, AIDS-related lymphoma, cutaneous T-cell lymphoma, B-cell lymphoma, mycosis fungoides, Hodgkin's disease and non-Hodgkin's disease). In other embodiments, the cancer is a myeloma (*e.g.*, multiple myeloma). In still other embodiments, the cancer is a pediatric cancer (*e.g.*, brain tumor, Ewing's sarcoma, leukemia (*e.g.*, acute lymphocytic leukemia or acute myelogenous leukemia), liver cancer, a lymphoma (*e.g.*, Hodgkin's lymphoma or non-Hodgkin's lymphoma), neuroblastoma, retinoblastoma, sarcoma (*e.g.*, osteosarcoma or rhabdomyosarcoma), and Wilms' Tumor. In still further embodiments, the cancer is a male reproductive cancer, including but not limited to prostate; testicular, epididymal, and penile cancer. In additional embodiments, the cancer is a skin cancer (*e.g.*, cutaneous T cell lymphoma, mycosis fungoides, Kaposi's sarcoma, subcutaneous, or melanoma). In further embodiments, the cancer is thyroid cancer (*e.g.*, papillary, follicular, medullary or anaplastic or undifferentiated thyroid carcinoma). In additional embodiments, the cancer is urinary tract cancers (*e.g.*, bladder, kidney and urethral). In further embodiments, the cancer or cancer-related condition is ataxia-telangiectasia; carcinoma of unknown primary origin, Li-Fraumeni syndrome or thymoma. In still further embodiments, the cancer is metastatic cancer.

In additional embodiments, the cancer-related target is a molecule associated with a cancerous cell or tissue. In some embodiments, the molecule is a tumor or tumor vasculature/stroma antigen, for example, CD20, CD19, CD30, CD3, GD2, Lewis-Y, 72 kd glycoprotein (gp72, decay-accelerating factor, CD55, DAF, C3/C5 convertases), CO17-1A (EpCAM, 17-1A, EGP-40), TAG-72, CSAg-P (CSAp), 45kd glycoprotein, HT-29 ag, NG2, A33 (43kd gp), 38kd gp, MUC-1, CEA, EGFR (HER1), HER2, HER3, HER4, HN-1 ligand, CA125, syndecan-1, Lewis X, FAP stromal Ag (fibroblast activation protein), EDG receptors (endoglin receptors), ED-B, laminin-5 (gamma2), cox-2 (+LN-5), PgP (P-glycoprotein), alphaVbeta3 integrin, alphaVbeta5 integrin, uPAR (urokinase plasminogen activator-receptor), endoglin (CD105), GD2, aminopeptidase, tenascin-C, NG-2, TEM1, TEM8, annexin, folate receptor osteopontin (EDG 1,3), p97 (melanotransferrin), farnesyl transferase or a molecule in an apoptotic pathway (*e.g.*, a death receptor, fas, caspase or bcl-2) or a lectin.

In alternative embodiments, the target is a blood cell, including hematopoietic cells (*e.g.*, hematopoietic stem cells, as well as the various immature cells in the erythrocytic, thromobocytic, and leukocytic lineages. "Blood cells" include but are not limited to hematopoietic cells, erythrocytes, neutrophils, monocytes, platelets, mast cells, eosinophils, basophils, lymphocytes, B cells, T cells, plasma cells, mast cells, macrophages and natural killer cells. In some embodiments, the target is an abnormal blood cell. In some embodiments, the HSC targets have a surface antigen expression profile of CD34$^+$ Thy-1$^+$ or CD34$^+$ Thy-1$^+$ Lin$^-$ ("Lin$^-$" refers to a cell population selected on the basis of the lack of expression of at least one lineage specific marker). Methods for isolating and selecting HSCs are well known in the art (*See e.g.,* U.S. Patent Nos. 5,061,620, 5,677,136, and 5,750,397).

In other embodiments, the target is a molecule. In some embodiments, the molecule is an organic molecule. In further embodiments, the molecule is a biological molecule. In additional embodiments, the biological molecule is a cell-associated molecule. In still further embodiments, the cell-associated molecule is associated with the outer surface of a cell. In some embodiments, the cell-associated molecule is part of the extracellular matrix. In some additional embodiments, the cell-associated molecule is a protein. In some embodiments, the protein is a receptor. In additional embodiments, the cell-associated molecule is specific to a particular cell type. In further embodiments, the cell is a diseased and/or abnormal cell. In some preferred embodiments, the diseased cell is a cancer cell. In another embodiment, the diseased cell is an infected cell. Additional molecules that find use as targets in the present invention include, but are not limited to, proteins, peptides, nucleic acids, carbohydrates, lipids, polysaccharides, glycoproteins, hormones, receptors, antigens, antibodies, toxic substances, metabolites, inhibitors, drugs, dyes, nutrients and growth factors.

Non-limiting examples of protein and chemical targets encompassed by the present invention include chemokines and cytokines and their receptors. The term "cytokine" as used herein, refers to any of the numerous factors that exert a variety of effects on cells (*e.g.*, inducing growth, differentiation, and/or proliferation). Non-limiting examples include interleukins (IL), such as IL-2, IL-3, IL-4 IL-6, IL-10, IL-12, IL-13, IL-14 and IL-16; soluble IL-2 receptor; soluble IL-6 receptor; erythropoietin (EPO); thrombopoietin (TPO); granulocyte macrophage colony stimulating factor (GM-CSF); stem cell factor (SCF); leukemia inhibitory factor (LIF); interferons (*e.g.*, IFN-alpha, -beta, and -gamma); oncostatin M (OM); the immunoglobulin superfamily; tumor necrosis factor (TNF) family, particularly TNF-$\alpha$; transforming growth factors, (*e.g.*, TGF-alpha and TGF-beta); and IL-1$\alpha$; and vascular endothelial growth factor (VEGF) family, particularly VEGF (also referred to in the art as VEGF-A), VEGF-B, VEGF-C, VEGF-D and placental growth factor (PLGF). Cytokines are commercially available from several vendors including Amgen (Thousand Oaks, CA), Immunex (Seattle, WA) and Genentech (South San Francisco, CA). In some embodiments, particularly preferred targets are VEGF and TNF-$\alpha$.

Antibodies against TNF-$\alpha$ show that blocking interaction of the TNF-$\alpha$ with its receptor is useful in modulating over-expression of TNF-$\alpha$ in several disease states such as septic shock, rheumatoid arthritis, and other inflammatory processes. VEGF is an angiogenic inducer, a mediator of vascular permeability and an endothelial cell-specific mitogen. VEGF has also been implicated in tumors. It is contemplated that targeting members of the VEGF family and/or their receptors will have significant therapeutic applications. For example, it is contemplated that blocking VEGF will have therapeutic value in ovarian hyper stimulation syndrome (OHSS) (*See e.g.*, Ferrara et al., Nat. Med., 5:1359 [1999]); and Gerber et al., Nat. Med., 5:623 [1999]). Other preferred targets include cell-surface receptors, such as T-cell receptors.

"Chemokines" are a family of small proteins that play an important role in cell trafficking and inflammation. Members of the chemokine family include, but are not limited to, IL-8, stromal-derived factor-1(SDF-1), platelet factor 4, neutrophil activating protein-2 (NAP-2) and monocyte chemo attractant protein-1 (MCP-1). These proteins also find use as targets in the methods of the present invention.

Other protein and chemical targets include, but are not limited to: immunoregulation modulating proteins, such as soluble human leukocyte antigen (HLA, class I and/or class II, and non-classical class I HLA (E, F and G)); surface proteins, such as soluble T or B cell surface proteins; human serum albumin; arachadonic acid metabolites, such as prostaglandins, leukotrienes, thromboxane and prostacyclin; IgE, auto or alloantibodies for autoimmunity or allo- or xenoimmunity; Ig Fc receptors or Fc receptor binding factors; G-protein coupled receptors; cell-surface carbohydrates; angiogenesis factors; adhesion molecules; ions, such as calcium, potassium, magnesium, aluminum and iron; fibril proteins, such as prions and tubulin; enzymes, such as proteases, aminopeptidases, kinases, phosphatases, DNAses, RNAases, lipases, esterases, dehydrogenases, oxidases, hydrolases, sulphatases, cyclases, transferases, transaminases, carboxylases, decarboxylases, superoxide dismutase and their natural substrates or analogs; hormones and their corresponding receptors, such as follicle stimulating hormone (FSH), leutinizing hormone (LH), thyroxine (T4 and T3), apolipoproteins, low density lipoprotein (LDL), very low density lipoprotein (VLDL), cortisol, aldosterone, estriol, estradiol, progesterone, testosterone, dehydroepiandrosterone (DHBA) and its sulfate (DHEA-S); peptide hormones, such as renin, insulin, calcitonin, parathyroid hormone (PTH), human growth hormone (hGH), vasopressin and antidiuretic hormone (AD), prolactin, adrenocorticotropic hormone (ACTH), LHRH, thyrotropin-releasing hormone (THRH), vasoactive intestinal peptide (VIP), bradykinin and corresponding prohormones; catechcolamines such as adrenaline and metabolites; cofactors including atrionatriutic factor (AdF), vitamins A, B, C, D, E and K and serotonin; coagulation factors, such as prothrombin, thrombin, fibrin, fibrinogen, Factor VIII, Factor IX, Factor XI and von Willebrand factor; plasminogen factors, such as plasmin, complement activation factors, LDL and ligands thereof and uric acid; compounds regulating coagulation, such as hirudin, hirulog, hementin, heparin and tissue plasminogen activator (TPA); nucleic acids for gene therapy; enzyme antagonists; compounds that bind ligands, such as inflammation factors and receptors and other proteins that bind to one or more of the preceding molecules.

Additional chemical targets include without limitation drugs, especially drugs subject to abuse, such as cannabis, heroin and other opiates, phencyclidine (PCP), barbiturates, cocaine and its derivatives and benzadiazepine; toxins, such as heavy metals like mercury and lead, arsenic and radioactive compounds; chemotherapeutic agents, such as paracetamol, digoxin and free radicals; bacterial toxins, such as lipopolysaccharides (LPS) and other gram negative toxins, *Staphylococcus* toxins, toxin A, tetanus toxins, diphtheria toxin, and pertussis toxins; plant and marine toxins; snake and other venoms, virulence factors, such as aerobactins, toxins, proteins, etc.; infectious viruses, such as hepatitis, cytomegalovirus (CMV), herpes simplex viruses (*e.g.*, HSV types 1, 2 and 6), Epstein-Barr virus (EBV), varicella zoster virus (VZV), human immunodeficiency viruses (*e.g.*, HIV-1, -2) and other retroviruses, adenoviruses, rotaviruses, influenzae, rhinoviruses, parvoviruses, rubella, measles virus, polio, pararmyxoviruses, papovaviruses, poxviruses, arboviruses, flaviviruses, arenaviruses, rabies virus, caliciviruses, astroviruses, rotaviruses, and picomaviruses; prions; plasmodia tissue factor, protozoans; including amebae (*e.g., Entamoeba histolytica*), filariae (*e.g., Wuchereria*), *Plasmodium, Giardia, Leishmania, Cryptosporidium, Sarcocystis, Babesia, Trypanosoma,* and *Toxoplasma*; helminths (*e.g.,* trematodes, cestodes and nematodes); bacteria, including aerobic, anaerobic and facultative bacteria responsible for sepsis, nosocomial, and other infections (*e.g., E. coli, Acinetobacter, Pseudomonas, Proteus, Klebsiella, Staphylococcus, Streptococcus, Neisseria,* mycobacteria, *Legionnella, Clostridium, Mycoplasma, Treponema, Chlamydia, Rickettsia, Bartonella,* etc.) and fungi (*e.g., Candida, Pneumocystis, Aspergillus, Trichosporum, Microsporum, Pichnia, Coccidioides, Blastomyces, Histoplasma,*

*Cryptococcus,* etc.). Indeed, it is not intended that the present invention be limited to any particular target, as any target that can be bound (*i.e.*, to form a bound target) finds use in the present invention.

In further embodiments, the target is a plant or plant-derived material. In some embodiments, the target is wood, while in other embodiments, the target is a non-woody plant. It is intended that the present invention encompass any plant and/or plant-derived material.

In some embodiments, the target is an enzyme such as proteases, aminopeptidases, kinases, phosphatases, DNAses, RNAases, lipases, esterases, dehydrogenases, oxidases, hydrolases, sulphatases, cellulases, cyclases, transferases, transaminases, carboxylases, decarboxylases, superoxide dismutase, and their natural substrates or analogs. Particularly preferred enzymes include hydrolases, particularly alpha/beta hydrolases; serine proteases, such as subtilisins, and chymotrypsin serine proteases; cellulases and lipases.

In yet additional embodiments, the surface is a non-biological surface. In some embodiments, the non-biological surface is a surface of a medical device. In further embodiments, the medical device is a therapeutic device. In yet other embodiments, the therapeutic device is an implanted therapeutic device. In additional embodiments, the medical device is a diagnostic device. In some embodiments, the diagnostic device is a well or tray.

In further embodiments, the target is a non-biological material. In some embodiments, the non-biological material is a fabric. In some preferred embodiments, the fabric is a natural fabric. In additional embodiments, the fabric is cotton, silk and/or wool. In further embodiments, the fabric is a non-natural fabric. In some embodiments, the fabric is nylon, rayon and/or polyester. In some embodiments, the fabric is a blend of natural and/or synthetic fibers. In still further embodiments, the non-biological material is a plastic, ceramic, metal, and/or rubber. In additional embodiments, the material is a composite material of any of the above.

In additional embodiments, the target is a microcircuit. This circuit can be in its finished form or in any stage of circuit manufacturing. The targeted agent can be used to remove or deposit a compound onto the circuit, for example, an n-type dopant (*e.g.*, arsenic, phosphorus, antimony, titanium or other donor atom species) or a p-type dopant (*e.g.*, boron, aluminum, gallium, indium or other acceptor atom species) (*See, e.g.*, van Zant, Microchip Fabrication, McGraw-Hill, New York, [2000]),

Indeed, it is not intended that the present invention be limited to any particular target, as any target that can be bound (*i.e.*, to form a bound target) finds use in the present invention.

In some embodiments, a stain on a surface is regarded as a target population. Thus, in some embodiments, a stain on a piece of cotton contains potential target molecules to which an agent may tightly bind, but the unstained cotton comprises anti-target molecules to which anti-target agents bind. Thus, in some embodiments, a stain is a compound that contains target molecules to which agents specifically bind. In some embodiments, the compound is a colored compound that adds color to a textile, metal or other fabric or solid material, or to substances that result in the visual appearances of stains. Targeted classes of colored substances which may appear as a stain include, but are not limited to the following: porphyrin derived structures (*e.g.*, heme in blood and chlorophyll in plants); tannins and polyphenols (*See,* Ribéreau-Gayon, in Oliver and Boyd (eds.), Plant Phenolics, Edinburgh [1972], pp. 169-198) which occur in tea stains, wine stains, banana stains and peach stains; carotenoids and carotenoid derivatives, the coloured substances which occur in tomatoes (lycopene, the red color), mangoes (carotene, the orange-yellow color) and paprika; oxygenated carotenoids and xanthophylls (*See e.g.,* Bartley et al., Plant Cell, The, 7:1027-1038 [1995]); anthocyanins (*i.e.*, the highly coloured molecules which occur in many fruits and flowers; *See,* Ribéreau-Gayon, *supra,* at pp. 135-169); and Maillard reaction products (*i.e.*, the yellow/brown coloured substances which appear upon heating of mixtures of carbohydrate molecules in the presence of protein/peptide structures, such as those found in cooking oil). In alternative embodiments, a coloured compound is a dye that is incorporated into a fiber by chemical reaction, adsorption or dispersion (*e.g.*, direct blue dyes, acid blue dyes, reactive blue dyes, and reactive black dyes). In some preferred embodiments, particularly preferred targets include carotenoid and xanthophyll stains.

In some embodiments, stains are selected from the following non-limiting group of stains: porphyrin derived stains, tannin derived stains, carotenoid pigment derived stains, anthocyanin pigment derived stains, soil-based stains, oil-based stains and human body derived stains. In some preferred embodiments, the stain is blood-derived stain or chlorophyll-derived stain. More specifically, in some embodiments, the stain is grass, paprika, a tea-derived stain or a fruit or vegetable derived stain (*e.g.*, from wine, tomatoes or berries). In some particularly preferred embodiments, the preferred stain is human body soil and more specifically stains referred to as "collar soil."

In methods of the invention, there are at least two target populations comprising a first target population and a second target population. The first target population and the second target population are different. In some more particularly preferred embodiments, the first target population and the second target population are cells. In yet additional preferred embodiments, the first target population contains normal cells and the second target population contains abnormal cells. In still further preferred embodiments, the abnormal second target population comprises tumor cells.

In some embodiments in which the first target population are molecules on damaged cells, tissues or organs, the second target population comprises healthy normal (*i.e.*, non-damaged) cells, tissue, organs or combinations thereof. In some embodiments, the cells, tissue and/or organs are selected from the group consisting of healthy normal whole blood, skin, hair, teeth and nails. In some embodiments, proteins normally expressed on the surface of a wild-type cell are second target population molecules, whereas proteins that are only expressed on the surface of cancer cells are first target population molecules. However, it is not intended that the present invention be limited to the comparison of molecules expressed on wild-type cells with those on abnormal or diseased cells. In alternative embodiments, different, healthy cell types are compared to one another so as to identify cell-specific proteins (*e.g.*, a kidney cell may be compared to a liver cell).

In some further embodiments in which the target is a molecule present on damaged cells, tissues or organs, the anti-target molecule is present on healthy normal (*i.e.*, non-damaged) cells, tissue, organs or combinations thereof. In some embodiments, the anti-target molecules are present on or in cells, tissue and/or organs are selected from the group consisting of healthy normal whole blood, skin, hair, teeth and nails. In some embodiments, proteins normally expressed on the surface of a wild-type cell are anti-target molecules, whereas proteins that are only expressed on the surface of cancer cells are target molecules. However, it is not intended that the present invention be limited to the comparison of molecules expressed on wild-type cells with those on abnormal or diseased cells. In alternative embodiments, different, healthy cell types are compared to one another so as to identify cell-specific proteins (*e.g.*, a kidney cell may be compared to a liver cell).

In some preferred embodiments, the methods of the present invention further comprise repeating the steps of incubating the first target population with the first collection of agents in an incubation mixture and washing the incubation mixture to remove unbound agents from the incubation mixture.

In some alternative preferred embodiments, the concentration of the amplified collection of anti-target agents is at least about 1000-fold greater than the concentration of the first collection of agents. Preferably, each member of the collection of anti-target agents may be represented at levels that are about 100-fold, about 500-fold, about 1000-fold, about 5000-fold, about 10,000-fold, about 100,000-fold, or about 1,000,000-fold greater than prior to amplification.

In some preferred embodiments, the agent is a peptide on the surface of a phage and the anti-target agent is another peptide on the surface of a phage. In some particularly preferred embodiments, the methods further comprise deactivating phage that contains an anti-target agent prior to incubating the amplified collection with the second target population and with the first collection of agents. In some preferred embodiments, the step of deactivating comprises exposing the phage to a temperature that renders the phage non-viable.

There is no requirement in the invention that an agent, anti-target agent, target population, nor collection of agents be characterized to such extent that the molecules to which they bind are known. Thus, for example, in some embodiments, it is not important to know prior to screening, which anti-target agents bind to anti-target molecules on or in a target. Similarly, it is not necessary that the target molecule or population and anti-target molecule be characterized in some detail at the structural (*e.g.*, sequence-related), chemical, or genetic level to allow some control over the purity, stability and concentration of the target molecule or population. Likewise, it is not necessary to know to which agents or anti-target agents a molecule may bind.

In some preferred embodiments, the target population has a low concentration. In some preferred embodiments, the low concentration is between about 1 micromolar (1e-6M) to about 1 picomolar (1e-12M), while in some particularly preferred embodiments, the concentration is between about 1e-7 M and about 1e-11 M.

Thus as described herein, the present invention provides methods for identifying an agent that binds to a target molecule in a target population. As described in greater detail herein, a "target population" is a group of targets (*e.g.*, a group of cells or nucleic acids), each member of which contains at least one target molecule. In some preferred embodiments, the methods involve contacting a first target population with a first collection of agents in an incubation mixture, wherein at least some of the agents contact molecules in the first target population. As described herein, a "first collection of agents" is a group of molecules (*e.g.*, a group of peptides), which bind to wild-type or normal target molecules.

Methods according to the invention require washing the incubation mixture to remove unbound agents from the incubation mixture, and then incubation mixture to remove unbound agents from the incubation mixture, and then eluting the bound agents, in order to produce a collection of anti-target agents. These anti-target agents are amplified, so that each member is represented in solution at a very high concentration.

In some embodiments, amplification produces additional copies of nucleic acid sequences and is carried out using polymerase chain reaction (PCR) technology well known in the art. In some alternative embodiments, amplification occurs by the production of phage by a host cell.

Thus, in some embodiments, following amplification, each member of the collection of anti-target agents is present at a very high copy number. For example, in some embodiments, each member of the collection of anti-target agents is present at levels that are about 100-fold, about 500-fold, about 1000-fold, about 5000-fold, about 10,000-fold, about 100,000-fold, or about 1,000,000-fold greater than the concentration of anti-target agents prior to amplification.

In some embodiments, because the amplified collection of anti-target agents is in vast excess to the first collection of agents, the anti-target agents bind to essentially all of the anti-targets in the second target population. Any target molecules in the second target population that were not represented in the first target population are detectable (*i.e.*, by the binding of an agent to that target). Accordingly, after washing, the identity of that agent is identified and analyzed as to whether or not it is a binder of interest. In some embodiments, the second target population contains the same targets as the first target population, while in alternative embodiments, the second target population contains different targets than the first target population. For example, in some embodiments, the first target population contains healthy liver cells, whereas the second target population contains diseased liver cells. Alternatively, in some embodiments, the first target population contains skin, while the second target population contains hair. In yet further embodiments, the first target population is present on a clean cloth, while the second target population is present on a cloth containing a stain.

In some embodiments, the agent is a peptide expressed on the surface of a phage and the first and second target populations are wild-type and abnormal cells, respectively.

In some preferred embodiments, the methods are carried out using phage display. Phage display is an *in vitro* selection technique in which a peptide or protein is genetically fused to a coat protein of a bacteriophage, resulting in display of the fused protein on the exterior of the phage, while the DNA encoding the fusion resides within the phage (*See e.g.*, Barbas et al., Phage Display, a Laboratory Manual, Cold Spring Harbor Press, [2001]). This method allows screening of vast numbers of variants of a protein or different proteins, each linked to its corresponding DNA sequence.

In some preferred embodiments, the collection of agents is at least one type of peptide on the surface of a phage. In some preferred embodiments, the peptide comprises at least one antibody. In other preferred embodiments, the methods further comprise deactivating phage, wherein the deactivation occurs prior to incubating phage with the collection of targets and the phage comprising a collection of agents. In alternative preferred embodiments, the step of deactivating comprises exposing the phage to a temperature that renders the phage non-viable. In some embodiments, amplification is also used in order to produce additional copies of nucleic acid sequences. In some preferred embodiments, amplification is performed using PCR, as known in the art. In other embodiments, amplification occurs by the production of phage through infection of a host. In some embodiments, the collection of agents comprises peptides expressed on the surface of phage, and a first and second target populations are wild-type and abnormal cells, respectively.

Distinguishing and/or separating the phage is achieved using any suitable method known in the art. For example, in some embodiments, the amplified collection of peptides present on eluted phage is deactivated by incubating the phage at 80°C for 5 minutes, such that only the phage of the first pool of phage-displayed peptides are viable and can replicate and grow in culture.

In alternative embodiments, two different strains or cultures of phage that differ are used. For example strains having different nucleotide sequences and/or antimicrobial resistance patterns find use in the present invention. Thus, in the case of antimicrobial resistance, the amplified collection of agents does not grow in the presence of the chosen antimicrobial, but the phage bearing the binder do grow. In some embodiments, PCR primers designed to hybridize only to sequences in the genomes of one strain of phage are used to identify which phage are present.

Also described herein are methods for isolating at least one binder of interest, the method comprising the steps of: contacting a target population with a collection of agents, the target population having a low concentration; washing off agents that do not bind to the target population; and distinguishing, separating and identifying at least one binder of interest.

The collection of agents may comprise at least one type of peptide. In an alternative, the collection of agents may comprise at least one type of nucleic acid. The nucleic acid may be a DNA or RNA molecule.

The collection of agents may have a manipulated concentration. The manipulated concentration may be between about $1\times10^{-3}$ and about $1\times10^{3}$ times the concentration of the target population. The manipulated concentration may comprise a decrease in agent diversity such that each individual agent concentration increases to between about $1\times10^{-4}$ and about $1\times10^{2}$ times the desired dissociation constant of the agent. The manipulated concentration may be include at least one competitive binder, wherein the at least one competitive binder comprises a binder with a predetermined dissociation constant for a desired target.

The target population may be selected from the group consisting of cancerous cells, cell lines or cell cultures, tumor extracts or cancerous tissues or organs, or molecules associated with cancerous cells, cell lines or cell cultures (e.g., specific antigens). Thus, the target population may be a group of antigens. The antigens may contain at least one antigen selected from the group consisting of the cancer antigens muc-1, Tag72, CEA, CD22, ED-B and FAP.

The target population may have a low concentration being between about 1 micromolar (1e-6M) and between about 1 picomolar (1e-12M); the preferable range is any concentration between about 1e-7 and about 1e-11.

The collection of agents may comprise at least one type of peptide, or the collection of agents may comprise at least one type of nucleic acid. The nucleic acid may be a DNA or RNA molecule.

In some alternative preferred embodiments, the method is carried out using phage display. In some preferred embodiments, the collection of agents is at least one type of peptide present on the surface of a phage. In some preferred embodiments, the peptide comprises at least one antibody. In some preferred embodiments, the method further comprises deactivating phage, wherein the deactivation occurs prior to incubating phage with the collection of targets and the phage comprising a collection of agents. In some preferred embodiments, the deactivating step comprises exposing the phage to a temperature that renders the phage non-viable. In some preferred embodiments, the methods further comprise conducting PCR amplification using oligonucleotides that are specific to a nucleic acid sequence in the collection of phage.

The present invention also provides methods for isolating at least one peptide of interest, comprising the steps of: incubating at least one collection of wild-type cells with a first pool of phage-displayed peptides; washing off phage that do not bind to target molecules on the surface of the wild-type cells; eluting phage that are bound to target molecules to produce a collection of anti-target peptides; amplifying the collection of anti-target peptides; applying the amplified collection of anti-target peptides and the first and/or a second pool of phage-displayed peptides obtained following incubation of at least one collection of wild-type cells with a first pool of phage-displayed peptides, to abnormal cells; washing off phage that do not bind to target molecules on the surface of abnormal cells to leave a cell surface covered with bound anti-target peptides as well as with at least one peptide of interest; distinguishing and/or separating the phage bearing the at least one peptide of interest from the phage bearing the anti-target peptides; and identifying the at least one peptide of interest.

In some preferred embodiments, the first collection of phage and the second collection of phage contain different genomes. In some other preferred embodiments, the step of determining the identity of a peptide from the second collection of phage that binds to a target expressed on the surface of a cell of the second cell population comprises PCR amplification using oligonucleotides that are specific to a nucleic acid sequence in the second collection of phage. In additional preferred embodiments, antimicrobial resistance markers are used, and the antimicrobial resistance pattern of the first collection of phage is different than the antimicrobial resistance of the second collection of phage.

In some preferred embodiments, the method further comprises repeating the steps of incubating the first target population with the first collection of agents in an incubation mixture and washing the incubation mixture to remove unbound agents from the incubation mixture.

In some preferred embodiments, the concentration of the amplified collection of anti-target phage is at least about 1000-fold greater than the concentration of the second collection of phage.

In further preferred embodiments, the methods further comprise deactivating phage containing an anti-target agent prior to incubating the amplified collection with the second target population and with the first collection of agents. In some preferred embodiments, the deactivating step comprises exposing the phage to a temperature that renders the phage non-viable.

In some preferred embodiments, the phage bearing the anti-target peptides are amplified by about 100-, about 500-, about 1000-, about 10,000- or about 1,000,000-fold, and then applied to the abnormal cells in the method described above. Accordingly, the amplified collection of anti-target peptides bind to cell-surface proteins that are common to both the wild-type and the abnormal cells. By also applying the original, or a different, pool of phage-displayed peptides, the proteins only expressed on the surface of abnormal cells remain unbound and, therefore, become targets for novel peptides contained in that pool.

As indicated above, distinguishing and/or separating the phage is achieved using any suitable method known in the art. In some embodiments, the amplified collection of anti-target peptides on eluted phage are deactivated by incubating the phage at 80°C for 5 minutes, such that only the phage of the first pool of phage-displayed peptides are viable and can replicate and grow in culture (*See e.g.,* Barbas *et al.*, *supra*).

In alternative embodiments, two different strains or cultures of phage that differ are used. For example strains having different nucleotide sequences and/or antimicrobial resistance patterns find use in the present invention. Thus, in the case of antimicrobial resistance, the amplified collection of agents does not grow in the presence of the chosen antimicrobial, but the phage bearing the binder grow. In some embodiments, PCR primers designed to hybridize only to sequences in the genomes of one strain of phage are used to identify which phage are present.

In some particularly preferred embodiments, the methods involve applying amplified and purified anti-target peptides to the second target population that are not linked or joined to a phage. In this case, the phage that are eluted are collected and used to transfect bacterial cells, which produce the peptide or protein associated with the phage (*See e.g.*, Barbas *et al.*, *supra*) Then, the expressed peptide or protein is purified from the bacterial culture and used as the amplified collection of anti-target agents, along with phage bearing potentially novel agents. In this way, essentially all of the non-specific, anti-target molecules are bound to the expressed and purified peptides, while the target molecules are bound to phage. Accordingly, only viable phage that bind to target molecules grow in culture.

## EXPERIMENTAL

The following examples serve to illustrate certain preferred embodiments and aspects of the present invention and are not to be construed as limiting the scope thereof.

In the experimental disclosure which follows, the following abbreviations apply: sd and SD (standard deviation); M (molar); mM (millimolar); μM (micromolar); nM (nanomolar); mol (moles); mmol (millimoles); μmol (micromoles); nmol (nanomoles); gm (grams); mg (milligrams); μg (micrograms); pg (picograms); L (liters); ml (milliliters); μl (microliters); cm (centimeters); mm (millimeters); μm (micrometers); nm (nanometers); LF (lethal factor); °C (degrees Centigrade); cDNA (copy or complementary DNA); DNA (deoxyribonucleic acid); ssDNA (single stranded DNA); dsDNA (double stranded DNA); dNTP (deoxyribonucleotide triphosphate); RNA (ribonucleic acid); PBS (phosphate buffered saline); g (gravity); OD (optical density); CPM and cpm (counts per minute); rpm (revolutions per minute); Dulbecco's phosphate buffered solution (DPBS); HEPES (N-[2-Hydroxyethyl]piperazine-N-[2-ethanesulfonic acid]); HBS (HEPES buffered saline); SDS (sodium dodecylsulfate); Tris-HCl (tris[Hydroxymethyl]aminomethane-hydrochloride); 2-ME (2-mercaptoethanol); EGTA (ethylene glycol-bis(ß-aminoethyl ether) N, N, N', N'-tetraacetic acid); EDTA (ethylenediaminetetracetic acid); Abbott (Abbott Laboratories, Abbott Park, IL); Bio-Synthesis (Bio-Synthesis, Lewisville, TX); ATCC (American Type Culture Collection, Rockville, MD); Gibco/BRL (Gibco/BRL, Grand Island, NY); Sigma (Sigma Chemical Co., St. Louis, MO); Pharmacia (Pharmacia Biotech, Piscataway, NJ); Pierce (Pierce Biotechnology, Rockford, IL); Roche (Roche Diagnostics Corporation, Indianapolis, IN); Synpep (Synpep, Pleasanton, CA); Bachem (Bachem Biosciences, King of Prussia, PA); and Stratagene (Stratagene, La Jolla, CA).

**Example 1**

**Libraries and Competition Among Binders**

In the following Example, various calculations are provided. It is not intended that the present invention be limited to any specific calculation method: The following designations are used herein: for a library L of n members, let

$T°$ = total amount of target $T$ = unbound target, $P_i$ = unbound library member I, $P_i°$ = total amount of library member I, $K^i_D$ = dissociation constant for $P_1$ with $T$, $TP_i$ = complex of $P_i$ with $T$, $k^1_{on}$ = second order association rate constant, $k^i_{off}$ = 1st order dissociation rate constant. Figures 1-8 provide graphic illustrations of the relationships exemplified herein.

In this Example it is assumed that: 1) steady state binding is reached; 2) each target has one binding site which binds only one member; and 3) each member has the same second order association rate constant, then the following equation represents competition among library members:

- The on rate is calculated as follows:

$$d(TP_i)/dt = k^i_{on}(T)(P_i)$$

- The off rate is calculated as follows:

$$-d(TP_i)/dt = k^i_{off}(TP_i)$$

- At a steady state, the following applies:

$$d(TP_i)/dt = -d(TP_i)/dt$$

$$k^i_{on}(T)(P_i) = k^i_{off}(TP_i)$$

$$k^i_{off}/k^i_{on} = (T))(P_i)/(TP_i) = K^i_D$$

- In a library with n members that bind to the target, the concentration of free target is:

$$T = T^0 - TP_1 - TP_2 - TP_3 \ldots - TP_n$$

- For each member $P_i$ :

$$K^i_D = (T)(P_i)/(TP_i)$$

$$T = (TP_i/P_i)K^i_D$$

- In the library L, there is one binding member that binds the tightest ("$P_1$"). The ratio of bound $P_1$ to free $P_1$ as a function of T is:

$$T = (TP_1/P_1)K^1_D$$

- since T is the concentration of free target, for any other member $P_i$ of the library:

$$T = (TP_i/P_i)K^i_D$$

- For each member Pi of the library, the bound over free ratio ($TP_i/P_i$) relative to that of the tightest binder ($TP_1/P_1$) is given by:

$$(TP_i /P_i ) K^i_D = (TP_1 /P_1 ) K^1_D$$

$$(TP_i /P_i ) = (TP_1 /P_1 ) K^1_D / K^i_D$$

- For any member i of the library, the bound to free ratio $(TP_i /P_i )$ relative to that of $P_1$ is directly proportional to the ratio of the two dissociation constants:

$$\text{Let } x = (TP_1 /P_1); \quad r^1_i = K^1_D / K^i_D$$

$$TP_1 / P_1^o = (TP_1 /P_1) /(1+ (TP_1 /P_1) ) = x/(1+x)$$

$$TP_i / P_i^o = (TP_i /P_i) /(1+ (TP_i /P_i) )$$

$$\text{Eqn 1:} \quad TP_i / P_i^o = r^1_i * x/(1+ r^1_i *x)$$

- The ratio of bound member i $(TP_i )$ to bound member 1 $(TP_1)$ is:

$$TP_i /TP_1 = (1+x)* r^1_i *x*P_i^o/x*(1+ r^1_i *x)*P_1^o$$
$$= (1+x)* r^1_i *P_i^o/(1+ r^1_i *x)*P_1^o$$
$$= (1+x)*P_i^o/((1/ r^1_i)+x)*P_1^o$$

$$\text{Eqn 2:} \quad TP_i /TP_1 = (1+x)*P_i^o/((1/ r^1_i)+x)*P_1^o$$

$$T = (TP_1 /P_1)K^1_D = (x)K^1_D$$

As $T^o$ approaches 0; T approaches 0 and x approaches 0
As $T^o$ approaches ∞; T approaches ∞ and x approaches ∞

$$TP_i /TP_1 = (1+x)*P_i^o/((1/ r^1_i)+x)*P_1^o$$

As $T^o$ approaches 0; $TP_1 /TP_1$ approaches $(1)*P_1^o / ((1/ r^1_i)*P_1^o$ approaches $(r^1_i)*P_i^o/P_1^o$
As $T^o$ approaches ∞; $TP_i/TP_1$ approaches $(x)*P_i^o/(x)*P_1^o$ approaches $Pi^o/P_1^o$

Accordingly, when target is limiting, the amount of each binder relative to the tightest binder is proportional to the ratio of the dissociation constants. When target is at high concentration, each member is bound to the same extent. The relationship is illustrated in Figure 4. To observe only the tightest binders in a library, the target concentration must be limiting. To observe all binders in a library, the target should be present in excess. This relationship is illustrated in Figure 5. To increase the proportion of tight binders detected, various options are possible: 1) increase library concentration; 2) decrease diversity of library (increase member concentration); 3) decrease target concentration; or 4) add an excess of one weak binder that can be distinguished from the other binders (can be made invisible to the detection system). This relationship is illustrated in Figure 6.

**Example 2**

**Calculations for Isolating a Binder(s)**

In this Example, means for estimating or determining the mean binding energy and standard deviation for binding to the target are described. Determination is accomplished through any suitable means in the art, including but not limited to equilibrium dialysis, fluorescent activated cell sorting, or direct measurement of binding energies for ten randomly chosen members of the library. In some embodiments involving small molecule targets and a library of protein or peptide ligands, data known to those in the art (*See e.g.*, Lancet et al., Proc. Natl. Acad. Sci., 90:3715-3719 [1993]) find use as an initial estimate for mean and standard deviation. In this reference, a mean binding energy of -1.5 kcal/mole was derived, with a standard deviation of 1.8 kcal/mol for a library of antibodies binding to vanillin. For binding of protein libraries to protein targets, alternative data find use (*See e.g.*, Laskowski et al., Proc. Natl. Acad. Sci., 98:1410-1415 [2001]) find use. In this reference, a mean binding energy of -5.5 kcal/mole with a standard deviation of 1.8 kcal/mole was derived for the binding of a library of ovomucoid protease inhibitors to *Streptomyces griseus* proteinase A. Both of these references indicate that their data follow a binomial (normal) distribution.

In some embodiments, various calculations are conducted. For example, calculations for a library in which 7 amino acids are varied (a diversity of $20^7$) are described herein. First, the expected number of Library members within each standard deviation from the mean are identified and an average binding energy is assigned to each member, with the total number of members in each group determined by the binomial (normal) distribution. All library members with binding energies weaker or equal to the mean are combined into one group. The total concentration of the library is determined. The mean binding energy (either estimated or determined) for the library to the target is also determined. The concentration and dissociation constant for an added competitor are determined. The standard deviation for the binding energies of the library and/or the square root of the mean binding energy is used (for estimated values) are then determined. The number of standard deviations away from the mean that would be represented by a single member by calculating 1/Library size is determined. The percentage of the library that is between each pair of standard deviations is determined from a Gaussian distribution. The library members with binding energies better than the mean binding energy are placed into groups where the binding energy varies by 1 standard deviation (*e.g.*, P1 is 6 standard deviations from the mean, P2 is 5-6 standard deviations, P3 is 4-5 standard deviations, etc.). The concentration of each species is determined by multiplying the % of the library by the total concentration. The delta G values at each standard deviation are determined by multiplying the number of standard deviations from the mean by the standard deviation and adding this to the to the mean delta G value. The average delta G for each species is calculated from the delta G values. Note that the average value calculated for <0 standard deviations from the mean is 2/3 the difference in the mean -1 standard deviation value, to include the total distribution. The average binding energy for each species is determined using the equation $K_{D=e}{}^{\Delta GIRT}$.

Equation 1 above is then used:

$$TP_i / P_i{}^o = r^1{}_i * x/(1 + r^1{}_i * x)$$

where

$$x = (TP_1 / P_1); \quad r^1{}_i = K^1{}_D / K^i{}_D$$

to calculate $TP_i / P_i{}^o$ at each value of $TP_1 / P_1$. The value of $TP_1 / P_1$ is varied from $1 \times 10^{-4}$ to $1 \times 10^7$. Equation 2 above is then used:

$$TP_i / TP_1 = (1+x) * P_i{}^o / ((1/r^1{}_i) + x) * P_1{}^o$$

to calculate the concentration of bound members in each group (i) relative to $TP_1$ for each value of $TP_1$. The values for $TP_1 / TP_1$ at each $TP_1 / P_1$ ratio are calculated. $TP_1$ is calculated by multiplying the calculated ratio $TP_1 / P_1{}^o$ in Row 26 by $P_1{}^o$. The total concentration of each bound species (i) is calculated by multiplying or $TP_i / TP_1$ by $TP_1$. Free (unbound) target concentration is calculated by multiplying $TP_1 / P_1$ by $K^1{}_D$, using the equation $T = (TP_1 / P_1) K^1{}_D$. The total target concentration that satisfies the equations is calculated by adding the total bound target to the free target. The concentration of each individual bound species is calculated by dividing the total concentration of bound species (i) by the number of binders at that $K_D^i$ ($P_i^o$ / $P_1^o$). The same calculations are also conducted, in which the Competitor concentration and dissociation constant are included.

These results are then plotted as a function of target concentration (To). These plots find use in determining desired target concentrations, library concentrations, library diversity and competitor concentrations to favor the identification of tight (better binding energy than the mean by several standard deviations) binding members of the library.

**Example 3**

**Mass Spectrometric Screening Against hSC Chymotrypsin for Inhibitors From a Protein Library**

In this Example, mass spectrometric screening experiments are described. Figures 10-13 provide data and calculations obtained during these experiments. Inhibitors of human stratum comium chymotrypsin (hSCC) were screened from a protein library made of BBI-loop-BLA (*See e.g.*, U.S. Pat. Appln. Ser. Nos. 10/984,270 and 10/984,410; and PCT Appln. Nos. US04/36976, US04/36979; and US04/36980), all of which are incorporated by reference herein). The protein library consisted of a protein backbone in which three non-consecutive positions were randomized (cysteine constrained) at the N-terminus of the protein. HSCC (screening target) (Swissprot, accession number P49862) was biotinylated and immobilized on streptavidin beads (MagnaBind Beads; Pierce).

HSCC was incubated with a protein library at 10nM per library member in the presence of a competitor (Ecotin; Sigma) added at 1nM, 10nM, and 100nM concentrations. Following incubation (4hrs), the beads were washed with incubation buffer to remove nonspecific binders and specific binders were eluted with an elution solution.

The recovered binders were concentrated (vacuum concentration), resuspended in a digestion buffer, reduced, alkylated, and digested with proteolytic enzyme (Lys-c; Roche). The resulting protein digests were analyzed by capillary LC-ESI-MS/MS.

Figure 11 shows the results. As shown in this Figure, PJ02 binder was observed under all conditions whereas the pj01 binder was observed only in condition with 100nM competitor (See, Figure 12C). In Figure 12 (12A and 12B, respectively), tandem mass spectra for these binders are shown.

Based on these mass spectra, the full sequences of each binder were determined. The binders (synthetic peptides prepared by Synpep) from this screening experiment were tested for inhibitory activity against hSCC. Figure 13 provides the titration of HSCC. with the two binders sequenced and a know inhibitor. The concentration of each binder varied from 0.1 to 10uM whereas hSCC was maintained at O.luM concentration. The chromogenic substrate for this inhibition experiment was the peptide suc-AAPF-pNA (Bachem Biosciences). These data indicated that pj02 binders is an inhibitor of hSCC (approximated Ki of 500nM).

**Claims**

1. A method for isolating at least one binder of interest, comprising the steps of:

   (i) contacting a first target population with a first collection of agents, under conditions such that at least a portion of said agents in said first collection bind to said first target population, to produce a first bound target;
   (ii) washing said first bound target;
   (iii) eluting said agents bound to said first bound target to produce a collection of anti-target agents;
   (iv) amplifying said collection of anti-target agents to produce an amplified collection of anti-target agents;
   (v) exposing:

   a) said amplified collection of anti-target agents; and
   b) said first collection of agents and/or a second collection of agents

   to a second target population, under conditions such that at least a portion of said agents bind to said second target population to produce a second bound target, wherein said first and second target population are different;
   (vi) washing said second bound target; and
   (vii) distinguishing, separating and identifying said at least one binder of interest,

   wherein said agents are peptides, polypeptides, proteins or nucleic acids.

2. The method of claim 1, wherein said nucleic acids comprise DNA or RNA.

**3.** The method of claim 1, wherein said target population is selected from the group consisting of cancerous cells, cell lines, cell cultures, tumor extracts, cancerous tissues, organs, molecules associated with cancerous cells, molecules associated with cancerous cell lines, molecules associated with cancerous cell cultures, molecules associated with tumor extracts, molecules associated with cancerous tissues, and molecules associated with cancerous organs.

**4.** The method of claim 1, wherein said target population is a group of antigens.

**5.** The method of claim 4, wherein said group of antigens comprises at least one antigen selected from the group consisting of cancer antigens muc-1, Tag72, CEA, CD22, ED-B and FAP.

**6.** The method of claim 1, wherein said first target population and the second target population are cells.

**7.** The method of claim 6, wherein

(a) said first target population contains normal cells and said second target population contains abnormal cells; or
(b) said second target population comprises tumor cells.

**8.** The method of claim 1, comprising the steps of:

(i) contacting a first target population with a first collection of agents, under conditions such that at least a portion of said agents in said first collection bind to said first target population, to produce a first bound target;
(ii) washing said first bound target;
wherein steps (i) and (ii) are repeated;
(iii) eluting said agents bound to said first bound target to produce a collection of anti-target agents;
(iv) amplifying said collection of anti-target agents to produce an amplified collection of anti-target agents;
(v) exposing:

a) said amplified collection of anti-target agents; and
b) said first collection of agents and/or a second collection of agents

to a second target population, under conditions such that at least a portion of said agents bind to said second target population to produce a second bound target, wherein said first and second target population are different;
(vi) washing said second bound target; and
(vii) distinguishing, separating and identifying said at least one binder of interest.

**9.** The method of claim 1, wherein the concentration of said amplified collection of anti-target agents is at least 1000-fold greater than the concentration of the first collection of agents.

**10.** The method of claim 9, wherein each member of said collection of anti- target agents is present at a level selected from the group consisting of about 100- fold, about 500-fold, about 1000-fold, about 5000-fold, about 10,000-fold, about 100,000-fold, and about 1,000,000-fold greater the levels prior to amplification.

**11.** The method of claim 1, wherein said method further utilizes phage display.

**12.** The method of claim 1, comprising the steps of:

(i) contacting a first target population with a first collection of peptides present on the surface of a phage or phage infected cell, under conditions such that at least a portion of said peptides in said first collection bind to said first target population, to produce a first bound target;
(ii) washing said first bound target;
(iii) eluting said phage or phage infected cell bound to said first bound target to produce a collection of anti-target peptides present on the surface of a phage or phage infected cell;
(iv) amplifying said collection of anti-target peptides
(v) exposing:

a) said amplified collection of anti-target peptides; and
b) said first collection of peptides and/or a second collection of peptides present on the surface of a phage or phage infected cell

to a second target population, under conditions such that at least a portion of said peptides bind to said second target population to produce a second bound target, wherein said first and second target population are different;

(vi) washing said second bound target; and

(vii) distinguishing, separating and identifying said at least one binder of interest.

13. The method of claim 12, further comprising the step of deactivating said phage comprising an anti-target peptide; prior to incubating said amplified collection with said second target population.

14. The method of claim 13, wherein said deactivating comprises exposing said phage to a temperature that renders said phage non-viable.

15. The method of claim 12, which further comprises producing the anti-target peptides in a transfected bacteriophage and purifying said anti-target peptides, wherein said purified anti-target peptides are used as the amplified collection of anti-target peptides in step (v).

16. The method of claim 12, wherein

(a) said amplified collection of anti-target peptides and
(b) said first and/or second collection of peptides

in step (v) are present on the surface of phage with different genomes.

17. A method for isolating at least one peptide of interest, comprising:

(i) incubating at least one collection of wild-type cells with a first pool of phage-displayed peptides, under conditions such that at least a portion of said wild-type cells will bind at least some members in said first pool of phage-displayed peptides to produce bound cells and unbound phage;

(ii) washing said bound cells and unbound phage under conditions such that said unbound phage are removed;

(iii) eluting phage that are bound to said bound cells, to produce a collection of anti-target peptides;

(iv) amplifying said collection of anti-target peptides;

(v) applying said amplified collection of anti-target peptides and the first and/or a second pool of phage-displayed peptides to abnormal cells, under conditions such that at least a portion of said abnormal cells bind to said anti-target peptides or said first and/or said second pool of phage-displayed peptides to produce bound abnormal cells having bound anti-target peptides and at least one peptide of interest;

(vi) washing said bound abnormal cells and removing any phage that do not bind to the surfaces of said abnormal cells to leave a cell surface covered with bound anti-target peptides and at least one peptide of interest;

(vii) distinguishing and/or separating said phage bearing said at least one peptide of interest from said abnormal cells bearing the anti-target peptides; and

(viii) identifying the said at least one peptide of interest.

18. The method of claim 17, wherein said amplified collection of anti-target peptides are displayed on a first collection of phage, and said first and/or second pool of phage-displayed peptides are displayed on a second collection of phage, wherein the first and said second collections of phage contain different genomes.

19. The method of claim 18, wherein said identifying said peptide in step (vii) is accomplished using amplification with oligonucleotides that are specific to at least a part nucleic acid sequence in said second collection of phage.

20. The method of claim 18, further comprising the step of using antimicrobial resistance patterns to distinguish between said first and said second collections of phage.

21. The method of claim 17, comprising:

(i) incubating at least one collection of wild-type cells with a first pool of phage-displayed peptides, under conditions such that at least a portion of said wild-type cells will bind at least some members in said first pool of phage-displayed peptides to produce bound cells and unbound phage;

(ii) washing said bound cells and unbound phage under conditions such that said unbound phage are removed; wherein steps (i) and (ii) are repeated;

(iii) eluting phage that are bound to said bound cells, to produce a collection of anti-target peptides;

(iv) amplifying said collection of anti-target peptides;

(v) applying said amplified collection of anti-target peptides and the first and/or a second pool of phage-displayed peptides to abnormal cells, under conditions such that at least a portion of said abnormal cells bind to said anti-target peptides or said first and/or said second pool of phage-displayed peptides to produce bound abnormal cells having bound anti-target peptides and at least one peptide of interest;

(vi) washing said bound abnormal cells and removing any phage that do not bind to the surfaces of said abnormal cells to leave a cell surface covered with bound anti-target peptides and at least one peptide of interest;

(vii) distinguishing and/or separating said phage bearing said at least one peptide of interest from said abnormal cells bearing the anti-target peptides; and

(viii) identifying the said at least one peptide of interest.

22. The method of claim 17, further comprising the step of deactivating said phage comprising an anti-target agent, prior to incubating said amplified collection with said second target population and said first and/or second collection of agents.

23. The method of claim 22, wherein said deactivating comprises exposing said phage to a temperature that renders said phage non-viable.

24. The method of claim 17, which further comprises producing the anti-target peptides in a transfected bacteriophage and purifying said anti-target peptides, wherein said purified anti-target peptides are used as the amplified collection of anti-target peptides in step (v).

25. The method of claim 17, wherein the concentration of said amplified collection of anti-target phage is at least about 1000-fold greater than the concentration of said second collection of phage.


**Patentansprüche**

1. Verfahren zum Isolieren zumindest eines Bindemittels von Interesse, das folgende Schritte umfasst:

(i) das Kontaktieren einer ersten Target-Population mit einer ersten Auswahl von Mitteln unter Bedingungen, unter denen zumindest ein Teil der Mittel in der ersten Auswahl an die erste Target-Population bindet, um ein erstes gebundenes Target zu bilden;

(ii) das Waschen des ersten gebundenen Targets;

(iii) das Eluieren der Mittel, die an das erste gebundene Target gebunden sind, um eine Auswahl von Anti-Target-Mitteln zu bilden;

(iv) das Amplifizieren der Auswahl von Anti-Target-Mitteln, um eine amplifizierte Auswahl von Anti-Target-Mitteln zu bilden;

(v) das Aussetzen:

a) der amplifizierten Auswahl von Anti-Target-Mitteln und

b) der ersten Auswahl von Mitteln und/oder einer zweiten Auswahl von Mitteln

gegenüber einer zweiten Target-Population, unter Bedingungen, unter denen zumindest ein Teil der Mittel an die zweite Target-Population bindet, um ein zweites gebundenes Target zu bilden, wobei das erste und das zweite gebundene Target unterschiedlich sind;

(vi) das Waschen des zweiten gebundenen Targets; und

(vii) das Unterscheiden, Trennen und Identifizieren des zumindest eines Bindemittels von Interesse,

wobei die Mittel Peptide, Polypeptide, Proteine oder Nucleinsäuren sind.

2. Verfahren nach Anspruch 1, worin die Nucleinsäuren DNA oder RNA umfassen.

3. Verfahren nach Anspruch 1, worin die Target-Population aus der aus kanzerösen Zellen, Zelllinien, Zellkulturen, Tumorextrakten, kanzerösen Geweben, Organen, mit kanzerösen Zellen assoziierten Molekülen, mit kanzerösen Zelllinien assoziierten Molekülen, mit kanzerösen Zellkulturen assoziierten Molekülen, mit Tumorextrakten assoziierten Molekülen, mit kanzerösen Geweben assoziierten Molekülen und mit kanzerösen Organen assoziierten Molekülen bestehenden Gruppe ausgewählt ist.

4. Verfahren nach Anspruch 1, worin die Target-Population eine Gruppe von Antigenen ist.

5. Verfahren nach Anspruch 4, worin die Gruppe von Antigenen zumindest ein aus der aus den Krebsantigenen muc-1, Tag72, CEA, CD22, ED-B und FAP bestehenden Gruppe ausgewähltes Antigen umfasst.

6. Verfahren nach Anspruch 1, worin die erste Target-Population und die zweite Target-Population Zellen sind.

7. Verfahren nach Anspruch 6, worin

(a) die erste Target-Population normale Zellen enthält und die zweite Target-Population anomale Zellen enthält; oder
(b) die zweite Target-Population Tumorzellen umfasst.

8. Verfahren nach Anspruch 1, das folgende Schritte umfasst:

(i) das Kontaktieren einer ersten Target-Population mit einer ersten Auswahl von Mitteln unter Bedingungen, unter denen zumindest ein Teil der Mittel in der ersten Auswahl an die erste Target-Population bindet, um ein erstes gebundenes Target zu bilden;
(ii) das Waschen des ersten gebundenen Targets;
wobei Schritt (i) und (ii) wiederholt werden;
(iii) das Eluieren der Mittel, die an das erste gebundene Target gebunden sind, um eine Auswahl von Anti-Target-Mitteln zu bilden;
(iv) das Amplifizieren der Auswahl von Anti-Target-Mitteln, um eine amplifizierte Auswahl von Anti-Target-Mitteln zu bilden;
(v) das Aussetzen:

a) der amplifizierten Auswahl von Anti-Target-Mitteln und
b) der ersten Auswahl von Mitteln und/oder einer zweiten Auswahl von Mitteln

gegenüber einer zweiten Target-Population, unter Bedingungen, unter denen zumindest ein Teil der Mittel an die zweite Target-Population bindet, um ein zweites gebundenes Target zu bilden, wobei das erste und das zweite gebundene Target unterschiedlich sind;
(vi) das Waschen des zweiten gebundenen Targets; und
(vii) das Unterscheiden, Trennen und Identifizieren des zumindest eines Bindemittels von Interesse.

9. Verfahren nach Anspruch 1, worin die Konzentration der amplifizierten Auswahl von Anti-Target-Antigenen zumindest 1000-mal höher ist als die Konzentration der ersten Auswahl von Mitteln.

10. Verfahren nach Anspruch 9, worin jedes Element der Auswahl von Anti-Target-Mitteln in einer Menge vorhanden ist, die aus der aus der etwa 100-fachen, der etwa 500-fachen, der etwa 1000-fachen, der etwa 5000-fachen, der etwa 10.000-fachen, der etwa 100.000-fachen und der etwa 1.000.000-fachen Menge vor der Amplifikation ausgewählt ist.

11. Verfahren nach Anspruch 1, worin das Verfahren weiters Phagendisplay nutzt.

12. Verfahren nach Anspruch 1, das folgende Schritte umfasst:

(i) das Kontaktieren einer ersten Target-Population mit einer ersten Auswahl von Peptiden, die auf der Oberfläche eines Phagen oder einer phageninfizierten Zelle vorhanden sind, unter Bedingungen, unter denen zumindest ein Teil der Peptide in der ersten Auswahl an die erste Target-Population bindet, um ein erstes gebundenes Target zu bilden;
(ii) das Waschen des ersten gebundenen Targets;
(iii) das Eluieren des Phagen oder der phageninfizierten Zelle, der/die an das erste gebundene Target gebunden ist, um eine Auswahl von Anti-Target-Peptiden zu bilden, die auf der Oberfläche eines Phagen oder einer phageninfizierten Zelle vorhanden sind;
(iv) das Amplifizieren der Auswahl von Anti-Target-Peptiden;
(v) das Aussetzen:

a) der amplifizierten Auswahl von Anti-Target-Peptiden und

b) der ersten Auswahl von Peptiden und/oder einer zweiten Auswahl von Peptiden, die auf der Oberfläche eines Phagen oder einer phageninfizierten Zelle vorhanden sind

gegenüber einer zweiten Target-Population, unter Bedingungen, unter denen zumindest ein Teil der Peptide an die zweite Target-Population bindet, um ein zweites gebundenes Target zu bilden, wobei das erste und das zweite gebundene Target unterschiedlich sind;

(vi) das Waschen des zweiten gebundenen Targets; und

(vii) das Unterscheiden, Trennen und Identifizieren des zumindest eines Bindemittels von Interesse.

13. Verfahren nach Anspruch 12, das weiters den Schritt des Deaktivierens des Phagen, der ein Anti-Target-Peptid umfasst, vor dem Inkubieren der amplifizierten Auswahl mit der zweiten Target-Population umfasst.

14. Verfahren nach Anspruch 13, worin das Deaktivieren das Aussetzen des Phagen gegenüber einer Temperatur umfasst, die den Phagen lebensunfähig macht.

15. Verfahren nach Anspruch 12, das weiters das Bilden der Anti-Target-Peptide in einem transfizierten Bakteriophagen und das Reinigen der Anti-Target-Peptide umfasst, wobei die gereinigten Anti-Target-Peptide in Schritt (v) als amplifizierte Auswahl von Anti-Target-Peptiden eingesetzt werden.

16. Verfahren nach Anspruch 12, worin

(a) die amplifizierte Auswahl von Anti-Target-Peptiden und

(b) die erste und/oder die zweite Auswahl von Peptiden

in Schritt (v) auf der Oberfläche von Phagen mit unterschiedlichen Genomen vorhanden sind.

17. Verfahren zum Isolieren zumindest eines Peptids von Interesse, umfassend:

(i) das Inkubieren zumindest einer Auswahl von Wildtyp-Zellen mit einem ersten Pool von Phagen-präsentierten Peptiden unter Bedingungen, unter denen zumindest ein Teil der Wildtyp-Zellen an zumindest manche Elemente des ersten Pools von Phagen-präsentierten Peptiden bindet, um gebundene Zellen und ungebundene Phagen zu bilden;

(ii) das Waschen der gebundenen Zellen und ungebundenen Phagen unter Bedingungen, unter denen die ungebundenen Phagen entfernt werden;

(iii) das Eluieren von Phagen, die an die gebundenen Zellen gebunden sind, um eine Auswahl von Anti-Target-Peptiden zu bilden;

(iv) das Amplifizieren der Auswahl von Anti-Target-Peptiden;

(v) das Anwenden der amplifizierten Auswahl von Anti-Target-Peptiden und des ersten und/oder eines zweiten Pools von Phagen-präsentierten Peptiden auf anomale Zellen unter Bedingungen, unter denen zumindest ein Teil der anomalen Zellen an die Anti-Target-Peptide oder den ersten und/oder den zweiten Pool von Phagen-präsentierten Peptiden bindet, um gebundene anomale Zellen mit gebundenen Anti-Target-Peptiden und zumindest einem Peptid von Interesse zu bilden;

(vi) das Waschen der gebundenen anomalen Zellen und Entfernen jeglicher Phagen, die nicht an die Oberfläche der anomalen Zellen binden, sodass die Zelloberfläche mit gebundenen Anti-Target-Peptiden und zumindest einem Peptid von Interesse bedeckt ist;

(vii) das Unterscheiden und/oder Trennen der Phagen, die zumindest ein Peptid von Interesse aufweisen, von den anomalen Zellen, welche die Anti-Target-Peptide aufweisen; und

(viii) das Identifizieren des zumindest einen Peptids von Interesse.

18. Verfahren nach Anspruch 17, worin die amplifizierte Auswahl von Anti-Target-Peptiden auf einer ersten Auswahl von Phagen präsentiert ist und der erste und/oder der zweite Pool von Phagen-präsentierten Peptiden auf einer zweiten Auswahl von Phagen präsentiert ist, wobei die erste und zweite Auswahl von Phagen unterschiedliche Genome enthalten.

19. Verfahren nach Anspruch 18, worin das Identifizieren des Peptids in Schritt (vii) unter Anwendung von Amplifikation mit Oligonucleotiden erreicht wird, die für zumindest einen Teil einer Nucleinsäuresequenz in der zweiten Auswahl von Phagen spezifisch sind.

**20.** Verfahren nach Anspruch 18, das weiters den Schritt des Anwendens von Mustern antimikrobieller Resistenz zur Unterscheidung zwischen der ersten und der zweiten Auswahl von Phagen umfasst.

**21.** Verfahren nach Anspruch 17, umfassend:

(i) das Inkubieren zumindest einer Auswahl von Wildtyp-Zellen mit einem ersten Pool von Phagen-präsentierten Peptiden unter Bedingungen, unter denen zumindest ein Teil der Wildtyp-Zellen an zumindest manche Elemente des ersten Pools von Phagen-präsentierten Peptiden bindet, um gebundene Zellen und ungebundene Phagen zu bilden;

(ii) das Waschen der gebundenen Zellen und ungebundenen Phagen unter Bedingungen, unter denen die ungebundenen Phagen entfernt werden;

wobei Schritt (i) und (ii) wiederholt werden;

(iii) das Eluieren von Phagen, die an die gebundenen Zellen gebunden sind, um eine Auswahl von Anti-Target-Peptiden zu bilden;

(iv) das Amplifizieren der Auswahl von Anti-Target-Peptiden;

(v) das Anwenden der amplifizierten Auswahl von Anti-Target-Peptiden und des ersten und/oder eines zweiten Pools von Phagen-präsentierten Peptiden auf anomale Zellen unter Bedingungen, unter denen zumindest ein Teil der anomalen Zellen an die Anti-Target-Peptide oder den ersten und/oder den zweiten Pool von Phagen-präsentierten Peptiden bindet, um gebundene anomale Zellen mit gebundenen Anti-Target-Peptiden und zumindest einem Peptid von Interesse zu bilden;

(vi) das Waschen der gebundenen anomalen Zellen und Entfernen jeglicher Phagen, die nicht an die Oberfläche der anomalen Zellen binden, sodass die Zelloberfläche mit gebundenen Anti-Target-Peptiden und zumindest einem Peptid von Interesse bedeckt ist;

(vii) das Unterscheiden und/oder Trennen der Phagen, die zumindest ein Peptid von Interesse aufweisen, von den anomalen Zellen, welche die Anti-Target-Peptide aufweisen; und

(viii) das Identifizieren des zumindest einen Peptids von Interesse.

**22.** Verfahren nach Anspruch 17, das weiters den Schritt des Deaktivierens des Phagen, der ein Anti-Target-Peptid umfasst, vor dem Inkubieren der amplifizierten Auswahl mit der zweiten Target-Population und der ersten und/oder der zweiten Auswahl von Mitteln umfasst.

**23.** Verfahren nach Anspruch 22, worin das Deaktivieren das Aussetzen der Phagen gegenüber einer Temperatur umfasst, welche die Phagen lebensunfähig macht.

**24.** Verfahren nach Anspruch 17, das weiters das Bilden der Anti-Target-Peptide in einem transfizierten Bakteriophagen und das Reinigen der Anti-Target-Peptide umfasst, wobei die gereinigten Anti-Target-Peptide in Schritt (v) als amplifizierte Auswahl von Anti-Target-Peptiden eingesetzt werden.

**25.** Verfahren nach Anspruch 17, worin die Konzentration der amplifizierten Auswahl von Anti-Target-Phagen zumindest etwa 1000-mal höher ist als die Konzentration der zweiten Auswahl von Phagen.


**Revendications**

**1.** Méthode pour isoler au moins un liant souhaité, comprenant les étapes de:

(i) mettre en contact une première population cible avec une première collecte d'agents, sous des conditions telles qu'au moins une portion desdits agents dans ladite première collecte se lie à ladite première population cible, pour produire une première cible liée;

(ii) laver ladite première cible liée;

(iii) éluer lesdits agents liés à ladite première cible liée pour produire une collecte d'agents anti-cible;

(iv) amplifier ladite collecte d'agents anti-cible pour produire une collecte amplifiée d'agents anti-cible;

(v) exposer:

a) ladite collecte amplifiée d'agents anti-cible; et
b) ladite première collecte d'agents et/ou une deuxième collecte d'agents

à une deuxième population cible, sous des conditions telles qu'au moins une portion desdits agents se lie à ladite deuxième population cible pour produire une deuxième cible liée, où les première et deuxième populations cible sont différentes;
(vi) laver ladite deuxième cible liée; et
(vii) distinguer, séparer et identifier ledit au moins un liant souhaité,

où lesdits agents sont des peptides, polypeptides, protéines ou acides nucléiques.

2. Méthode selon la revendication 1, dans laquelle lesdits acides nucléiques comprennent l'ADN ou l'ARN.

3. Méthode selon la revendication 1, dans laquelle ladite population cible est sélectionnée dans le groupe consistant en cellules cancéreuses, lignées cellulaires, cultures de cellules, extraits de tumeur, tissus cancéreux, organes, molécules associées à des cellules cancéreuses, molécules associées à des lignées de cellules cancéreuses, molécules associées à des cultures de cellules cancéreuses, molécules associées à des extraits de tumeur, molécules associées à des tissus cancéreux et molécules associées à des organes cancéreux.

4. Méthode selon la revendication 1, dans laquelle ladite population cible est un groupe d'antigènes.

5. Méthode selon la revendication 4, dans laquelle ledit groupe d'antigènes comprend au moins un antigène sélectionné dans le groupe consistant en antigènes de cancer muc-1, Tag72, CEA, CD22, ED-B et FAP.

6. Méthode selon la revendication 1, où ladite première population cible et la deuxième population cible sont des cellules.

7. Méthode selon la revendication 6, dans laquelle

(a) ladite première population cible contient des cellules normales, et ladite deuxième population cible contient des cellules anormales; ou
(b) ladite deuxième population cible comprend des cellules tumorales.

8. Méthode selon la revendication 1, comprenant les étapes de:

(i) mettre en contact une première population cible avec une première collecte d'agents, sous des conditions telles qu'au moins une portion desdits agents dans ladite première collecte se lie à ladite première population cible, pour produire une première cible liée;
(ii) laver ladite première cible liée;
où les étapes (i) et (ii) sont répétées;
(iii) éluer lesdits agents liés à ladite première cible liée pour produire une collecte d'agents anti-cible;
(iv) amplifier ladite collecte d'agents anti-cible pour produire une collecte amplifiée d'agents anti-cible;
(v) exposer:

a) ladite collecte amplifiée d'agents anti-cible; et
b) ladite première collecte d'agents et/ou une deuxième collecte d'agents

à une deuxième population cible, sous des conditions telles qu'au moins une portion desdits agents se lie à ladite deuxième population cible pour produire une deuxième cible liée, où lesdites première et deuxième populations cibles sont différentes;
(vi) laver ladite deuxième cible liée; et
(vii) distinguer, séparer et identifier ledit au moins un liant souhaité.

9. Méthode selon la revendication 1, dans laquelle la concentration de ladite collecte amplifiée d'agents anti-cible est au moins 1000 fois plus grande que la concentration de la première collecte d'agents.

10. Méthode selon la revendication 9, dans laquelle chaque membre de ladite collecte d'agents anti-cible est présent à un niveau sélectionné dans le groupe consistant en environ 100 fois, environ 500 fois, environ 1000 fois, environ 5000 fois, environ 10 000 fois, environ 100 000 fois et environ 1 000 000 de fois plus grand que les niveaux avant l'amplification.

11. Méthode selon la revendication 1, dans laquelle ladite méthode utilise en outre l'exposition sur phage.

**12.** Méthode selon la revendication 1, comprenant les étapes de:

(i) mettre en contact une première population cible avec une première collecte de peptides présent sur la surface d'un phage ou cellules infectées par un phage, sous des conditions telles qu'au moins une portion desdits peptides dans ladite première collecte se lie à ladite première population cible pour produire une première cible liée;
(ii) laver ladite première cible liée;
(iii) éluer ledit phage ou la cellule infectée par phage liée à ladite première cible liée pour produire une collecte de peptides anti-cible présent sur la surface d'un phage ou cellule infectée par phage;
(iv) amplifier ladite collecte desdits peptides anti-cible
(v) exposer:

a) ladite collecte amplifiée de peptides anti-cible; et
b) ladite première collecte de peptides et/ou une deuxième collecte de peptides présente sur la surface d'un phage ou cellule infectée par phage;

à une deuxième population cible, sous des conditions telles qu'au moins une portion desdits peptides se lie à ladite deuxième population cible pour produire une deuxième cible liée, où lesdites première et deuxième populations cibles sont différentes;
(vi) laver ladite deuxième cible liée; et
(vii) distinguer, séparer et identifier ledit au moins un liant souhaité.

**13.** Méthode selon la revendication 12, comprenant en outre l'étape consistant à désactiver ledit phage comprenant un peptide anti-cible avant l'incubation de ladite collecte amplifiée avec ladite deuxième population cible.

**14.** Méthode selon la revendication 13, dans laquelle ladite désactivation comprend l'exposition dudit phage à une température qui rend ledit phage non viable.

**15.** Méthode selon la revendication 12, qui comprend en outre la production des peptides anti-cible dans un bactériophage transfecté et la purification desdits peptides anti-cible, où lesdits peptides anti-cible purifiés sont utilisés comme collectes amplifiées de peptides anti-cible à l'étape (v).

**16.** Méthode selon la revendication 12, dans laquelle

(a) ladite collecte amplifiée de peptides anti-cible et
(b) ladite première et/ou deuxième collecte de peptides à l'étape (v) sont présentes sur la surface du phage avec des génomes différents.

**17.** Méthode d'isolation d'au moins un peptide souhaité, comprenant:

(i) incuber au moins une collecte de cellules de type sauvage avec un premier pool de peptides exposés sur phage, sous des conditions telles qu'au moins une portion desdites cellules de type sauvage se lie à au moins quelques membres dans ledit premier pool de peptides exposés sur phage pour produire des cellules liées et phages non liés;
(ii) laver lesdites cellules liées et phages non liés sous des conditions telles que lesdits phages non liés sont retirés;
(iii) éluer les phages qui sont liés auxdites cellules liées pour produire une collecte de peptides anti-cible;
(iv) amplifier ladite collecte de peptides anti-cible;
(v) appliquer ladite collecte amplifiée de peptides anti-cible et le premier et/ou un deuxième pool de peptides exposés sur phage à des cellules anormales, sous des conditions telles qu'au moins une portion desdites cellules anormales se lie audit peptide anti-cible ou auxdits premier et/ou deuxième pool de peptides affichés sur phage pour produire des cellules anormales liées ayant des peptides anti-cible liés et au moins un peptide souhaité;
(vi) laver lesdites cellules anormales liées et retirer tout phage qui ne se lie pas aux surfaces desdites cellules anormales pour laisser subsister une surface de cellules recouverte de peptides anti-cible liés et d'au moins un peptide souhaité;
(vii) distinguer et/ou séparer ledit phage portant ledit au moins un peptide souhaité desdites cellules anormales portant les peptides anti-cible; et

(viii) identifier ledit au moins un peptide souhaité.

**18.** Méthode selon la revendication 17, dans laquelle ladite collecte amplifiée de peptides anti-cible sont affichés sur une première collecte de phage, et ledit premier et/ou deuxième pool de peptides exposés sur phage sont affichés sur une deuxième collecte de phage, où les première et deuxième collectes de phage précitées contiennent des génomes différents.

**19.** Méthode selon la revendication 18, dans laquelle ladite identification dudit peptide à l'étape (vii) est accomplie en utilisant l'amplification avec des oligonucléotides qui sont spécifiques à au moins une séquence d'acides nucléiques partielle dans ladite deuxième collecte de phage.

**20.** Méthode selon la revendication 18, comprenant en outre l'étape consistant à utiliser des modèles de résistance anti-microbienne pour distinguer entre ladite première et ladite deuxième collecte de phage.

**21.** Méthode selon la revendication 17, comprenant:

(i) incuber au moins une collecte de cellules de type sauvage avec un premier pool de peptides affichés sur phage, sous des conditions telles qu'au moins une portion desdites cellules de type sauvage se lie à au moins quelques membres dans ledit premier pool de peptides affichés sur phage pour produire des cellules liées et des phages non liés;
(ii) laver lesdites cellules liées et phages non liés sous des conditions telles que lesdits phages non liés sont retirés;
où les étapes (i) et (ii) sont répétées;
(iii) éluer les phages qui sont liés auxdites cellules liées pour produire une collecte de peptides anti-cible;
(iv) amplifier ladite collecte de peptides anti-cible;
(v) appliquer ladite collecte amplifiée de peptides anti-cible et le premier et/ou un deuxième pool de peptides exposé sur phage à des cellules anormales, sous des conditions telles qu'au moins une portion desdites cellules anormales se lie auxdits peptides anti-cible ou audit premier et/ou second pool de peptides exposés sur phage pour produire des cellules anormales liées ayant des peptides anti-cible liés et au moins un peptide souhaité;
(vi) laver lesdites cellules anormales liées et retirer tout phage qui ne se lie pas aux surfaces desdites cellules anormales pour laisser subsister une surface de cellules recouverte de peptides anti-cible liés et d'au moins un peptide souhaité;
(vii) distinguer et/ou séparer ledit phage portant ledit au moins un peptide souhaité desdites cellules anormales portant les peptides anti-cible; et
(viii) identifier ledit au moins un peptide souhaité.

**22.** Méthode selon la revendication 17, comprenant en outre l'étape consistant à désactiver ledit phage comprenant un agent anti-cible, avant l'incubation de ladite collecte amplifiée avec ladite deuxième population cible et ladite première et/ou deuxième collecte d'agents.

**23.** Méthode selon la revendication 22, dans laquelle ladite désactivation comprend l'exposition dudit phage à une température qui rend ledit phage non viable.

**24.** Méthode selon la revendication 17, qui comprend en outre la production des peptides anti-cible dans un bactériophage transfecté et la purification desdits peptides anti-cible, où lesdits peptides anti-cible purifiés sont utilisés comme collecte amplifiée de peptides anti-cible à l'étape (v).

**25.** Méthode selon la revendication 17, dans laquelle la concentration de ladite collecte amplifiée de phages anti-cible est au moins environ 1000 fois plus grande que la concentration de ladite deuxième collecte de phages.

**Libraries: Competition Among Members**

TP1 and TP2 as a function of To; Pi = 1E-10, Kd1 = 1E-10, Kd2 = 1e-7

**FIG. 1**

**Libraries: Competition Among Members**

Concentration of each bound member of a library ((each member at 1E-10M)) with 1 binder at Kd = 1E-12, 10 binders at Kd = 1E-11, 100 binders at Kd = 1E-10, 1000 binders at Kd = 1E-9, 10,000 binders at Kd = 1E-8

**FIG. 2**

**Libraries: Competition Among Members**

Concentration of each bound member of a library ((each member at 1E-10M)) with 1 binder at Kd = 1E-12, 10 binders at Kd = 1E-11, 100 binders at Kd = 1E-10, 1000 binders at Kd = 1E-9, 10,000 binders at Kd = 1E-8, and 1 binder at 1E-4M with Kd = 1E-8

**FIG. 3**

**Phage Libraries: Bound Phage vs Target Concentration - Added Protein Binder**

Concentration of each bound member of a library ((each member at 1E-13M)) with 1 binder at Kd = 1E-10, 5 binders at Kd = 5E-10, 25 binders at Kd = 2.5E-9, 50 binders at Kd = 5E-9, 100 binders at Kd = 1E-8, and no additional binders

**FIG. 4**

**Phage Library: Bound Phage vs Target Concentration**

Concentration of each bound member of a library ((each member at 1E-13M)) with 1 binder at Kd = 1E-10, 5 binders at Kd = 5E-10, 25 binders at Kd = 2.5E-9, 50 binders at Kd = 5E-9, 100 binders at Kd = 1E-8, and 1 non-phage binder present at 1E-4M (1E-8 Kd)

*FIG. 5*

**Competitive Binding: Elution vs Retention**

## FIG. 6A

**Competitive Binding: Elution vs Retention**

## FIG. 6B

**Competitive Binding: Elution vs Retention**

## FIG. 6C

**Competitive Binding: Decreasing Target Concentration**

## FIG. 7A

**Competitive Binding: Decreasing Target Concentration**

## FIG. 7B

**Competitive Binding: Decreasing Target Concentration**

## FIG. 7C

**Adding a Competitive Binder to the Library**

🔻 50 @ 10 Minute Off Rate

## FIG. 8A

**Adding a Competitive Binder to the Library**

🔻 50 @ 10 Minute Off Rate

## FIG. 8B

| | | | | | | | |
|---|---|---|---|---|---|---|---|
| To | 3.09E-18 | 3.09E-17 | 3.09E-16 | 3.09E-15 | 3.09E-14 | 3.09E-13 | 3.09E-12 |
| TP1/P1 | 1.00E-04 | 1.00E-03 | 1.00E-02 | 1.00E-01 | 1.00E+00 | 1.00E+01 | 1.00E+02 |
| P1o | 1.00E-19 | 1.00E-19 | 1.00E-19 | 1.00E-19 | 1.00E-19 | 1.00E-19 | 1.00E-19 |
| P2o | 2.99E-17 | 2.99E-17 | 2.99E-17 | 2.99E-17 | 2.99E-17 | 2.99E-17 | 2.99E-17 |
| P3o | 3.17E-15 | 3.17E-15 | 3.17E-15 | 3.17E-15 | 3.17E-15 | 3.17E-15 | 3.17E-15 |
| P4o | 1.32E-13 | 1.32E-13 | 1.32E-13 | 1.32E-13 | 1.32E-13 | 1.32E-13 | 1.32E-13 |
| P5o | 2.15E-12 | 2.15E-12 | 2.15E-12 | 2.15E-12 | 2.15E-12 | 2.15E-12 | 2.15E-12 |
| P6o | 1.36E-11 | 1.36E-11 | 1.36E-11 | 1.36E-11 | 1.36E-11 | 1.36E-11 | 1.36E-11 |
| P7o | 3.41E-11 | 3.41E-11 | 3.41E-11 | 3.41E-11 | 3.41E-11 | 3.41E-11 | 3.41E-11 |
| P8o | 5.00E-11 | 5.00E-11 | 5.00E-11 | 5.00E-11 | 5.00E-11 | 5.00E-11 | 5.00E-11 |
| Kd1 | 3.09E-14 | 3.09E-14 | 3.09E-14 | 3.09E-14 | 3.09E-14 | 3.09E-14 | 3.09E-14 |
| Kd2 | 2.04E-13 | 2.04E-13 | 2.04E-13 | 2.04E-13 | 2.04E-13 | 2.04E-13 | 2.04E-13 |
| Kd3 | 8.92E-12 | 8.92E-12 | 8.92E-12 | 8.92E-12 | 8.92E-12 | 8.92E-12 | 8.92E-12 |
| Kd4 | 3.90E-10 | 3.90E-10 | 3.90E-10 | 3.90E-10 | 3.90E-10 | 3.90E-10 | 3.90E-10 |
| Kd5 | 1.70E-08 | 1.70E-08 | 1.70E-08 | 1.70E-08 | 1.70E-08 | 1.70E-08 | 1.70E-08 |
| Kd6 | 7.44E-07 | 7.44E-07 | 7.44E-07 | 7.44E-07 | 7.44E-07 | 7.44E-07 | 7.44E-07 |
| Kd7 | 3.25E-05 | 3.25E-05 | 3.25E-05 | 3.25E-05 | 3.25E-05 | 3.25E-05 | 3.25E-05 |
| Kd8 | 7.47E-04 | 7.47E-04 | 7.47E-04 | 7.47E-04 | 7.47E-04 | 7.47E-04 | 7.47E-04 |
| Kd1/Kd2 | 1.51E-01 | 1.51E-01 | 1.51E-01 | 1.51E-01 | 1.51E-01 | 1.51E-01 | 1.51E-01 |
| Kd1/Kd3 | 3.46E-03 | 3.46E-03 | 3.46E-03 | 3.46E-03 | 3.46E-03 | 3.46E-03 | 3.46E-03 |
| Kd1/Kd4 | 7.93E-05 | 7.93E-05 | 7.93E-05 | 7.93E-05 | 7.93E-05 | 7.93E-05 | 7.93E-05 |
| Kd1/Kd5 | 1.81E-06 | 1.81E-06 | 1.81E-06 | 1.81E-06 | 1.81E-06 | 1.81E-06 | 1.81E-06 |
| Kd1/Kd6 | 4.15E-08 | 4.15E-08 | 4.15E-08 | ·4.15E-08 | 4.15E-08 | 4.15E-08 | 4.15E-08 |
| Kd1/Kd7 | 9.50E-10 | 9.50E-10 | 9.50E-10 | 9.50E-10 | 9.50E-10 | 9.50E-10 | 9.50E-10 |
| Kd1/Kd8 | 4.13E-11 | 4.13E-11 | 4.13E-11 | 4.13E-11 | 4.13E-11 | 4.13E-11 | 4.13E-11 |
| TP1/P1o | 1.00E-04 | 9.99E-04 | 9.90E-03 | 9.09E-02 | 5.00E-01 | 9.09E-01 | 9.90E-01 |
| TP2/P2o | 1.51E-05 | 1.51E-04 | 1.51E-03 | 1.49E-02 | 1.31E-01 | 6.02E-01 | 9.38E-01 |
| TP3/P3o | 3.46E-07 | 3.46E-06 | 3.46E-05 | 3.46E-04 | 3.45E-03 | 3.35E-02 | 2.57E-01 |
| TP4/P4o | 7.93E-09 | 7.93E-08 | 7.93E-07 | 7.93E-06 | 7.92E-05 | 7.92E-04 | 7.86E-03 |
| TP5/P5o | 1.81E-10 | 1.81E-09 | 1.81E-08 | 1.81E-07 | 1.81E-06 | 1.81E-05 | 1.81E-04 |
| TP6/P6o | 4.15E-12 | 4.15E-11 | 4.15E-10 | 4.15E-09 | 4.15E-08 | 4.15E-07 | 4.15E-06 |
| TP6/P7o | 9.50E-14 | 9.50E-13 | 9.50E-12 | 9.50E-11 | 9.50E-10 | 9.50E-09 | 9.50E-08 |
| TP6/P8o | 4.13E-15 | 4.13E-14 | 4.13E-13 | 4.13E-12 | 4.13E-11 | 4.13E-10 | 4.13E-09 |
| TP2/TP1 | 4.52E+01 | 4.53E+01 | 4.56E+01 | 4.90E+01 | 7.86E+01 | 1.98E+02 | 2.83E+02 |
| TP3/TP1 | 1.10E+02 | 1.10E+02 | 1.11E+02 | 1.21E+02 | 2.19E+02 | 1.17E+03 | 8.23E+03 |
| TP4/TP1 | 1.04E+02 | 1.05E+02 | 1.06E+02 | 1.15E+02 | 2.09E+02 | 1.15E+03 | 1.05E+04 |
| TP5/TP1 | 3.89E+01 | 3.89E+01 | 3.93E+01 | 4.28E+01 | 7.78E+01 | 4.28E+02 | 3.93E+03 |
| TP6/TP1 | 5.64E+00 | 5.65E+00 | 5.70E+00 | 6.21E+00 | 1.13E+01 | 6.21E+01 | 5.70E+02 |
| TP7/TP1 | 3.24E-01 | 3.25E-01 | 3.28E-01 | 3.57E-01 | 6.49E-01 | 3.57E+00 | 3.28E+01 |
| TP8/TP1 | 2.07E-02 | 2.07E-02 | 2.09E-02 | 2.27E-02 | 4.13E-02 | 2.27E-01 | 2.09E+00 |
| To | 3.09E-18 | 3.09E-17 | 3.09E-16 | 3.09E-15 | 3.09E-14 | 3.09E-13 | 3.09E-12 |
| TP1 | 1.00E-23 | 9.99E-23 | 9.90E-22 | 9.09E-21 | 5.00E-20 | 9.09E-20 | 9.90E-20 |
| TP2 total n | 4.52E-22 | 4.52E-21 | 4.52E-20 | 4.46E-19 | 3.93E-18 | 1.80E-17 | 2.80E-17 |
| TP3 total n | 1.10E-21 | 1.10E-20 | 1.10E-19 | 1.10E-18 | 1.09E-17 | 1.06E-16 | 8.15E-16 |
| TP4 total n | 1.04E-21 | 1.04E-20 | 1.04E-19 | 1.04E-18 | 1.04E-17 | 1.04E-16 | 1.04E-15 |
| TP5 total n | 3.89E-22 | 3.89E-21 | 3.89E-20 | 3.89E-19 | 3.89E-18 | 3.89E-17 | 3.89E-16 |
| TP6 total n | 5.64E-23 | 5.64E-22 | 5.64E-21 | 5.64E-20 | 5.64E-19 | 5.64E-18 | 5.64E-17 |
| TP7 total n | 3.24E-24 | 3.24E-23 | 3.24E-22 | 3.24E-21 | 3.24E-20 | 3.24E-19 | 3.24E-18 |
| TP8 total n | 2.07E-25 | 2.07E-24 | 2.07E-23 | 2.07E-22 | 2.07E-21 | 2.07E-20 | 2.07E-19 |
| TPsum | 3.05E-21 | 3.05E-20 | 3.05E-19 | 3.05E-18 | 2.99E-17 | 2.73E-16 | 2.33E-15 |
| Tfree | 3.09E-18 | 3.09E-17 | 3.09E-16 | 3.09E-15 | 3.09E-14 | 3.09E-13 | 3.09E-12 |
| To | 3.09E-18 | 3.09E-17 | 3.09E-16 | 3.09E-15 | 3.09E-14 | 3.09E-13 | 3.09E-12 |

## FIG. 9A

| | | | | | | | |
|---|---|---|---|---|---|---|---|
| TP1 no Co | 1.00E-23 | 9.99E-23 | 9.90E-22 | 9.09E-21 | 5.00E-20 | 9.09E-20 | 9.90E-20 |
| TP2each n | 1.51E-24 | 1.51E-23 | 1.51E-22 | 1.49E-21 | 1.31E-20 | 6.02E-20 | 9.38E-20 |
| TP3each n | 3.46E-26 | 3.46E-25 | 3.46E-24 | 3.46E-23 | 3.45E-22 | 3.35E-21 | 2.57E-20 |
| TP4each n | 7.93E-28 | 7.93E-27 | 7.93E-26 | 7.93E-25 | 7.92E-24 | 7.92E-23 | 7.86E-22 |
| TP5each n | 1.81E-29 | 1.81E-28 | 1.81E-27 | 1.81E-26 | 1.81E-25 | 1.81E-24 | 1.81E-23 |
| TP6each n | 4.15E-31 | 4.15E-30 | 4.15E-29 | 4.15E-28 | 4.15E-27 | 4.15E-26 | 4.15E-25 |
| TP7each n | 9.50E-33 | 9.50E-32 | 9.50E-31 | 9.50E-30 | 9.50E-29 | 9.50E-28 | 9.50E-27 |
| TP8each n | 4.13E-34 | 4.13E-33 | 4.13E-32 | 4.13E-31 | 4.13E-30 | 4.13E-29 | 4.13E-28 |

## FIG. 9B

| | | | | |
|---|---|---|---|---|
| 3.09E-11 | 3.09E-10 | 3.09E-09 | 3.09E-08 | 3.09E-07 |
| 1.00E+03 | 1.00E+04 | 1.00E+05 | 1.00E+06 | 1.00E+07 |
| 1.00E-19 | 1.00E-19 | 1.00E-19 | 1.00E-19 | 1.00E-19 |
| 2.99E-17 | 2.99E-17 | 2.99E-17 | 2.99E-17 | 2.99E-17 |
| 3.17E-15 | 3.17E-15 | 3.17E-15 | 3.17E-15 | 3.17E-15 |
| 1.32E-13 | 1.32E-13 | 1.32E-13 | 1.32E-13 | 1.32E-13 |
| 2.15E-12 | 2.15E-12 | 2.15E-12 | 2.15E-12 | 2.15E-12 |
| 1.36E-11 | 1.36E-11 | 1.36E-11 | 1.36E-11 | 1.36E-11 |
| 3.41E-11 | 3.41E-11 | 3.41E-11 | 3.41E-11 | 3.41E-11 |
| 5.00E-11 | 5.00E-11 | 5.00E-11 | 5.00E-11 | 5.00E-11 |
| 3.09E-14 | 3.09E-14 | 3.09E-14 | 3.09E-14 | 3.09E-14 |
| 2.04E-13 | 2.04E-13 | 2.04E-13 | 2.04E-13 | 2.04E-13 |
| 8.92E-12 | 8.92E-12 | 8.92E-12 | 8.92E-12 | 8.92E-12 |
| 3.90E-10 | 3.90E-10 | 3.90E-10 | 3.90E-10 | 3.90E-10 |
| 1.70E-08 | 1.70E-08 | 1.70E-08 | 1.70E-08 | 1.70E-08 |
| 7.44E-07 | 7.44E-07 | 7.44E-07 | 7.44E-07 | 7.44E-07 |
| 3.25E-05 | 3.25E-05 | 3.25E-05 | 3.25E-05 | 3.25E-05 |
| 7.47E-04 | 7.47E-04 | 7.47E-04 | 7.47E-04 | 7.47E-04 |
| 1.51E-01 | 1.51E-01 | 1.51E-01 | 1.51E-01 | 1.51E-01 |
| 3.46E-03 | 3.46E-03 | 3.46E-03 | 3.46E-03 | 3.46E-03 |
| 7.93E-05 | 7.93E-05 | 7.93E-05 | 7.93E-05 | 7.93E-05 |
| 1.81E-06 | 1.81E-06 | 1.81E-06 | 1.81E-06 | 1.81E-06 |
| 4.15E-08 | 4.15E-08 | 4.15E-08 | 4.15E-08 | 4.15E-08 |
| 9.50E-10 | 9.50E-10 | 9.50E-10 | 9.50E-10 | 9.50E-10 |
| 4.13E-11 | 4.13E-11 | 4.13E-11 | 4.13E-11 | 4.13E-11 |
| 9.99E-01 | 1.00E+00 | 1.00E+00 | 1.00E+00 | 1.00E+00 |
| 9.93E-01 | 9.99E-01 | 1.00E+00 | 1.00E+00 | 1.00E+00 |
| 7.76E-01 | 9.72E-01 | 9.97E-01 | 1.00E+00 | 1.00E+00 |
| 7.34E-02 | 4.42E-01 | 8.88E-01 | 9.88E-01 | 9.99E-01 |
| 1.81E-03 | 1.78E-02 | 1.54E-01 | 6.45E-01 | 9.48E-01 |
| 4.15E-05 | 4.15E-04 | 4.13E-03 | 3.99E-02 | 2.93E-01 |
| 9.50E-07 | 9.50E-06 | 9.50E-05 | 9.49E-04 | 9.41E-03 |
| 4.13E-08 | 4.13E-07 | 4.13E-06 | 4.13E-05 | 4.13E-04 |
| 2.97E+02 | 2.99E+02 | 2.99E+02 | 2.99E+02 | 2.99E+02 |
| 2.46E+04 | 3.08E+04 | 3.16E+04 | 3.17E+04 | 3.17E+04 |
| 9.69E+04 | 5.83E+05 | 1.17E+06 | 1.30E+06 | 1.32E+06 |
| 3.89E+04 | 3.82E+05 | 3.29E+06 | 1.38E+07 | 2.03E+07 |
| 5.65E+03 | 5.64E+04 | 5.62E+05 | 5.42E+06 | 3.99E+07 |
| 3.25E+02 | 3.24E+03 | 3.24E+04 | 3.24E+05 | 3.21E+06 |
| 2.07E+01 | 2.07E+02 | 2.07E+03 | 2.07E+04 | 2.07E+05 |
| 3.09E-11 | 3.09E-10 | 3.09E-09 | 3.09E-08 | 3.09E-07 |
| 9.99E-20 | 1.00E-19 | 1.00E-19 | 1.00E-19 | 1.00E-19 |
| 2.97E-17 | 2.99E-17 | 2.99E-17 | 2.99E-17 | 2.99E-17 |
| 2.46E-15 | 3.08E-15 | 3.16E-15 | 3.17E-15 | 3.17E-15 |
| 9.68E-15 | 5.83E-14 | 1.17E-13 | 1.30E-13 | 1.32E-13 |
| 3.88E-15 | 3.82E-14 | 3.29E-13 | 1.38E-12 | 2.03E-12 |
| 5.64E-16 | 5.64E-15 | 5.62E-14 | 5.42E-13 | 3.99E-12 |
| 3.24E-17 | 3.24E-16 | 3.24E-15 | 3.24E-14 | 3.21E-13 |
| 2.07E-18 | 2.07E-17 | 2.07E-16 | 2.07E-15 | 2.07E-14 |
| 1.67E-14 | 1.06E-13 | 5.09E-13 | 2.09E-12 | 6.50E-12 |
| 3.09E-11 | 3.09E-10 | 3.09E-09 | 3.09E-08 | 3.09E-07 |
| 3.09E-11 | 3.09E-10 | 3.09E-09 | 3.09E-08 | 3.09E-07 |

*FIG. 9C*

| | | | | |
|---|---|---|---|---|
| 9.99E-20 | 1.00E-19 | 1.00E-19 | 1.00E-19 | 1.00E-19 |
| 9.93E-20 | 9.99E-20 | 1.00E-19 | 1.00E-19 | 1.00E-19 |
| 7.76E-20 | 9.72E-20 | 9.97E-20 | 1.00E-19 | 1.00E-19 |
| 7.34E-21 | 4.42E-20 | 8.88E-20 | 9.88E-20 | 9.99E-20 |
| 1.81E-22 | 1.78E-21 | 1.54E-20 | 6.45E-20 | 9.48E-20 |
| 4.15E-24 | 4.15E-23 | 4.13E-22 | 3.99E-21 | 2.93E-20 |
| 9.50E-26 | 9.50E-25 | 9.50E-24 | 9.49E-23 | 9.41E-22 |
| 4.13E-27 | 4.13E-26 | 4.13E-25 | 4.13E-24 | 4.13E-23 |

## FIG. 9D

## FIG. 10A-1

| FIG. 10A-1 |
|---|
| FIG. 10A-2 |

# FIG. 10A-1

# FIG. 10A-1

One Target (T), 7aa Diversity (20^7 Members)
Gaussian Distribution

| | |
|---|---|
| Library Size | 1.28E+09 |
| Library Concentration (M) | 1.00E-10 |
| Member Concentration | 7.81E-20 |
| Mean (delta G) | -5 |
| Kd Dev (sqrt (delta G) | 2.24 |
| Kd at Mean ($\Delta G = RT \ln Kd$) | 2.15E-04 |

| | |
|---|---|
| 1 Member (%) | 7.81250E-10 |
| Area Under the Curve (%) | 0.9999999992 |

| | |
|---|---|
| Single Member P1 Conc (M) | 7.81E-20 |
| Std Dev from Mean | 6.00 |
| delta G | 8.42 |
| Kd | 6.69E-07 |

| | |
|---|---|
| 1 Member Kd @ 6 s.d. = | 3.09E-14 |
| 5 to 6 s.d. Kd @ 5.5 s.d. = | 2.04E-13 |
| 4 to 5 s.d. Kd @ 4.5 s.d. = | 8.92E-12 |
| 3 to 4 s.d. Kd @ 3.5 s.d. = | 3.90E-10 |
| 2 to 3 s.d. Kd @ 2.5 s.d. = | 1.70E-08 |
| 1 to 2 s.d. Kd @ 1.5 s.d. = | 7.44E-07 |
| 0 to 1 s.d. Kd @ 0.5 s.d. = | 3.25E-05 |
| < 0 s.d. Kd @ -.67 s.d. = | 7.47E-04 |

| | Concentration | Kd | | Ka |
|---|---|---|---|---|
| P1o | 1.00E-19 | Kd1 | 3.09E-14 | 3.24E+13 |
| P2o | 2.99E-17 | Kd2 | 2.04E-13 | 4.90E+12 |
| P3o | 3.17E-15 | Kd3 | 8.92E-12 | 1.12E+11 |
| P4o | 1.32E-13 | Kd4 | 3.90E-10 | 2.57E+09 |
| P5o | 2.15E-12 | Kd5 | 1.70E-08 | 5.87E+07 |
| P6o | 1.36E-11 | Kd6 | 7.44E-07 | 1.34E+06 |
| P7o | 3.41E-11 | Kd7 | 3.25E-05 | 3.08E+04 |
| P8o | 5.00E-11 | Kd8 | 7.47E-04 | 1.34E+03 |
| P9o(COMP) | 1.00E-05 | Kd9 | 1.00E-06 | 1.00E+06 |

| # s.d. from the Mean | % of Library | # Members | Conc. (M) | Kd ave | Ka ave |
|---|---|---|---|---|---|
| > 6 s.d. | 0.000000% | 1 | 1.00E-19 | 3.09E-14 | 3.24E+13 |
| 5 to 6 s.d. | 0.00003% | 383 | 2.99E-17 | 2.04E-13 | 4.90E+12 |
| 4 to 5 s.d. | 0.003% | 40,576 | 3.17E-15 | 8.92E-12 | 1.12E+11 |
| 3 to 4 s.d. | 0.13% | 1,687,040 | 1.32E-13 | 3.90E-10 | 2.57E+09 |
| 2 to 3 s.d. | 2.15% | 27,456,000 | 2.15E-12 | 1.70E-08 | 5.87E+07 |
| 1 to 2 s.d. | 13.59% | 173,952,000 | 1.36E-11 | 7.44E-07 | 1.34E+06 |
| 0 to 1 s.d. | 34.13% | 436,864,000 | 3.41E-11 | 3.25E-05 | 3.08E+04 |
| > 0 s.d. | 50.00% | 640,000,000 | 5.00E-11 | 7.47E-04 | 1.34E+03 |
| Total | 100.00% | 1,280,000,000 | 1E-10 | | |

| # s.d. from the Mean | % of Library | # Members | Conc. (M) | Kd ave | Ka ave |
|---|---|---|---|---|---|
| > 6 s.d. | 1E-09 | 1.28E+00 | 1.00E-19 | 3.09E-14 | 3.24E+13 |
| 5 to 6 s.d. | 2.99E-07 | 382.75 | 2.99E-17 | 2.041E-13 | 4.90E+12 |
| 4 to 5 s.d. | 0.0000317 | 40,576 | 3.17E-15 | 8.917E-12 | 1.12E+11 |
| 3 to 4 s.d. | 0.001318 | 1,687,040 | 1.32E-13 | 3.896E-10 | 2.57E+09 |
| 2 to 3 s.d. | 0.02145 | 27,456,000 | 2.15E-12 | 1.702E-08 | 5.87E+07 |
| 1 to 2 s.d. | 0.1359 | 173,952,000 | 1.36E-11 | 7.437E-07 | 1.34E+06 |
| 0 to 1 s.d. | 0.3413 | 436,864,000 | 3.41E-11 | 3.249E-05 | 3.08E+04 |
| (NOTE ave 0.67) -1 - 0 s.d. | 0.3413 | 436,864,000 | 3.41E-11 | 7.47E-04 | 1.34E+03 |
| > -1 s.d. | 0.1587 | 2.03E+08 | 1.59E-11 | 6.20E-02 | 1.61E+01 |
| Total | 1 | 1,280,000,000 | 1E-10 | | |

| | delta G | delta G at 1/2 | Kd ave | Kd at s.d. | Ka at s.d. |
|---|---|---|---|---|---|
| 6 s.d. | -18.42 | -17.30 | 2.04E-13 | 3.09E-14 | 3.24E+13 |
| 5 s.d. | -16.18 | -15.06 | 8.92E-12 | 1.35E-12 | 7.41E+11 |
| 4 s.d. | -13.94 | -12.83 | 3.90E-10 | 5.89E-11 | 1.70E+10 |
| 3 s.d. | -11.71 | -10.59 | 1.70E-08 | 2.58E-09 | 3.88E+08 |
| 2 s.d. | -9.47 | -8.35 | 7.44E-07 | 1.13E-07 | 8.89E+06 |
| 1 s.d. | -7.24 | -6.12 | 3.25E-05 | 4.92E-06 | 2.03E+05 |
| Mean | -5.00 | | | 2.15E-04 | 4.66E+03 |
| (NOTE ave 0.67) ave! -1 s.d. | -2.76 | -4.26 | 7.47E-04 | 9.38E-03 | 1.07E+02 |
| > -2 s.d. | -0.53 | -1.65 | 6.20E-02 | 4.10E-01 | 2.44E+00 |

## FIG. 10A-2

EP 1 800 136 B1

**One Target (T), 7aa Diversity (20^7 Members)   1,280,000,000**

< 0 s.d. Kd @ -.67 s.d. = 7.47E-04
# Members 640,000,000

0 to 1 s.d. Kd @ 0.5 s.d. = 3.25E-05
# Members 436,864,000

1 to 2 s.d. Kd @ 1.5 s.d. = 7.44E-07
# Members 173,952,000

2 to 3 s.d. Kd @ 2.5 s.d. = 1.70E-08
# Members 27,456,000

3 to 4 s.d. Kd @ 3.5 s.d. = 3.90E-10
# Members 1,687,040

4 to 5 s.d. Kd @ 4.5 s.d. = 8.92E-12
# Members 40,576

5 to 6 s.d. Kd @ 5.5 s.d. = 2.04E-13
# Members 383

1 Member Kd @ 6 s.d. = 3.09E-14
# Members 1

*FIG. 10B*

EP 1 800 136 B1

FIG. 10C

FIG. 10D

**FIG. 10E**

FIG. 11A — Mass Spectrometric Screening for hSC Chymotrypsin Inhibitors from a Protein Library with 1nM Competitor

FIG. 11B — Mass Spectrometric Screening for hSC Chymotrypsin Inhibitors from a Protein Library with 10nM Competitor

**Mass Spectrometric Screening for hSC Chymotrypsin Inhibitors from a Protein Library**
**Library with 100nM Competitor**

*ptj030225_12*

Conditions
Competitor: ecotin ($K_i$ 8 nM)
Library: pCM03 library (BBI-loop-BLA)
8000 members

* indicates background

*FIG. 11C*

EP 1 800 136 B1

MS/MS Sequencing of hSC Chymotrypsin Binder pj01

HCTVSGPPQCYGGGK (pj01)

FIG. 12A

FIG. 12B

MS/MS Sequencing of hSC Chymotrypsin Binder pj02

MS/MS Sequencing of hSC Chymotrypsin Binder pj02

FIG. 13A

EP 1 800 136 B1

FIG. 13B

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9002545 W
- US 4946778 A
- US 4458066 A
- US 5061620 A
- US 5677136 A
- US 5750397 A
- US 6261535 B
- US 984270 A
- US 10984410 A
- US 0436976 W
- US 0436979 A
- US 0436980 A

**Non-patent literature cited in the description**

- **SINGLETON ; SAINSBURY.** Dictionary of Microbiology and Molecular Biology. John Wiley and Sons, 1994
- **HALE ; MARHAM.** The Harper Collins Dictionary of Biology. Harper Perennial, 1991
- **SAMBROOK et al.** Molecular Cloning: A Laboratory Manual. Cold Spring Harbor Laboratory Press, 1989
- **AUSUBEL et al.** Current Protocols in Molecular Biology. Greene-Publishing & Wiley Interscience, 1987
- **HARLOW ; LANE.** Antibodies: A Laboratory Manual. Cold Spring Harbor Laboratory Press
- **KÖHLER ; MILSTEIN.** *Nature,* 1975, vol. 256, 495-497
- **KOZBOR et al.** *Immunol. Today,* 1983, vol. 4, 72
- **COLE et al.** Monoclonal Antibodies and Cancer Therapy. Alan R. Liss, Inc, 1985, 77-96
- **COTE et al.** *Proc. Natl. Acad. Sci. U.S.A.,* 1983, vol. 80, 2026-2030
- **HUSE et al.** *Science,* 1989, vol. 246, 1275-1281
- **NARANG et al.** *Meth. Enzymol.,* 1979, vol. 68, 90-99
- **BEAUCAGE et al.** *Tetrahedron Lett.,* 1981, vol. 22, 1859-1862
- **GOODCHILD.** *Bioconjugate Chemistry,* 1990, vol. 1 (3), 165-187
- **FERRARA et al.** *Nat. Med.,* 1999, vol. 5, 1359
- **GERBER et al.** *Nat. Med.,* 1999, vol. 5, 623
- **VAN ZANT.** Microchip Fabrication. McGraw-Hill, 2000
- **RIBÉREAU-GAYON.** Plant Phenolics. 1972, 169-198
- **BARTLEY et al.** *Plant Cell, The,* 1995, vol. 7, 1027-1038
- **BARBAS et al.** Phage Display, a Laboratory Manual. Cold Spring Harbor Press, 2001
- **LANCET et al.** *Proc. Natl. Acad. Sci.,* 1993, vol. 90, 3715-3719
- **LASKOWSKI et al.** *Proc. Natl. Acad. Sci.,* 2001, vol. 98, 1410-1415